# EUROPEAN PATENT APPLICATION

(11) **EP 4 209 401 A1**
(43) Date of publication of application: **12.07.2023**
(21) Application number: 20952534.4
(22) Date of filing: 02.09.2020
(51) Int. Cl.: B60W 50/14, B60W 40/02, B60W 60/00, B60K 35/00, B60W 50/00

(54) **SYSTEM FOR VEHICLE AR SCREEN IMAGE, AND METHOD FOR PROVIDING VEHICLE AR SCREEN IMAGE SERVICE**

(71) Applicant: LG Electronics Inc., Seoul 07336 (KR)
(72) Inventor: LEE, Jinsang, Seoul 06772 (KR); KANG, Byoungsu, Seoul 06772 (KR); SEO, Jin, Seoul 06772 (KR); SHIN, Sangmi, Seoul 06772 (KR)
(74) Representative: Vossius & Partner Patentanwälte Rechtsanwälte mbB
(86) International application number: PCT/KR2020/011756
(87) International publication number: WO 2022/050435

(57) **Abstract**

A system for a vehicle AR screen image, and a method for providing a vehicle AR screen image service are disclosed. The present specification comprises: a vehicle comprising a display for displaying an AR screen image, and a GPS module for acquiring position information; a first server for providing data for the AR screen image to the vehicle; and a second server for providing advertisement data to the first server, wherein the AR screen image includes a first region in which first AR content based on the advertisement data is displayed, and a second region in which second AR content based on the position information is displayed, and the first region and the second region can be arranged along a driving section of the vehicle.

## Description

### [Technical Field]

The present disclosure relates to a system for a vehicle AR screen and a method of providing a vehicle AR screen service.

### [Background Art]

Vehicles may be classified into an internal combustion engine vehicle, an external composition engine vehicle, a gas turbine vehicle, an electric vehicle, etc. based on types of motors used therefor.

As a result of recent steady technology development, a vehicle can express a lot of information using an augmented reality (AR) technology. When a display of the vehicle is displayed using an AR image, etc. as above, there are empty spaces wasted in a section in which the vehicle is driving, and there have been many studies to utilize the wasted empty spaces in the meantime.

In particular, there is a need for a technology capable of effectively providing various advertisements to vehicle occupants by displaying advertisements in the wasted empty spaces.

### [Disclosure]

### [Technical Problem]

An object of the present disclosure is to provide an AR screen to a vehicle.

Another object of the present disclosure is to provide advertising services to vehicle occupants by utilizing AR contents on an AR screen displayed on a vehicle.

Another object of the present disclosure is to provide various information as well as advertisements by utilizing AR contents on an AR screen displayed on a vehicle.

Another object of the present disclosure is to propose a system and service for allowing vehicle occupants to more effectively encounter advertisements by providing advertising services to services provided to vehicles.

Another object of the present disclosure is to propose an effective system and service capable of displaying AR advertising contents together with POI images capable of representing various information on an AR screen.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

### [Technical Solution]

In order to solve the above-described and other objects, in one aspect of the present disclosure, there is provided a system for a vehicle AR screen, comprising a vehicle including a display on which an AR screen is displayed and a GPS module configured to acquire location information, a first server configured to provide data for the AR screen to the vehicle, and a second server configured to provide advertising data to the first server, wherein the AR screen includes a first area in which a first AR content based on the advertising data is displayed, and a second area in which a second AR content based on the location information is displayed, and wherein the first area and the second area are arranged along a driving section of the vehicle.

The vehicle may further include a photographing device configured to take an external image of the vehicle, a transceiver configured to receive the data for the AR screen and transmit the external image, and a processor configured to display the AR screen on the display.

The first server may receive the external image from the vehicle and arrange the first area in a preset section of the driving section of the vehicle based on the external image. The first server may acquire information on the driving section of the vehicle from the external image.

The first server may arrange the first area in a preset section of the driving section of the vehicle.

The first server may arrange the second area in a remaining section except the section in which the first area is arranged.

The second server may provide the advertising data to the first server based on a category requested from the vehicle.

The first server may receive, from the vehicle, information on a section to arrange the first area or the second area based on a preset condition.

The vehicle may sense an empty section, in which the first area and the second area are not displayed, in the driving section of the vehicle and transmit data for the empty section to the first server.

The first server may receive, from the second server, information on a designated section to arrange the first area, and the first area may be arranged along the designated section.

The first AR content may include an AR Wall, and the second AR content may include a point of interest (POI) image.

The second AR content may include a point of interest (POI) image. The POI image may be changed based on a driving difficulty expected until the vehicle reaches a point indicated by the POI image.

The driving difficulty may be expected based on at least one of a distance, an estimated arrival time, an estimated elapse time, a number of U-turns, and whether there is a road construction.

The driving difficulty may be expected based on a parking ease of the point indicated by the POI image.

In order to solve the above-described and other objects, in another aspect of the present disclosure, there is provided a method of providing an AR screen service for a vehicle, the method comprising receiving AR screen request data from the vehicle, receiving driving data from the vehicle, receiving advertising data from an external server, generating first data for an AR screen based on the driving data and the advertising data, and transmitting the first data to the vehicle, wherein the AR screen includes a first area in which a first AR content based on the advertising data is displayed, and a second area in which a second AR content based on location information is displayed, and wherein the first area and the second area are arranged along a driving section of the vehicle.

The first area may be arranged in a preset section of the driving section of the vehicle.

The second area may be arranged in a remaining section except the section in which the first area is arranged.

The method may further comprise receiving, from the vehicle, information on a section to arrange the first area and the second area. The information may be information on an empty section, in which the first area and the second area are not displayed, in the driving section of the vehicle.

The method may further comprise receiving, from the external server, information on a designated section to arrange the first area. The first area may be arranged along the designated section.

The first AR content may include an AR Wall, and the second AR content may include a point of interest (POI) image.

The second AR content may include the point of interest (POI) image. The POI image may be changed based on a driving difficulty expected until the vehicle reaches a point indicated by the POI image.

### [Advantageous Effects]

The present disclosure has an effect of providing an AR screen to a vehicle.

The present disclosure has an effect of providing advertising services to a vehicle occupant by utilizing AR contents on an AR screen displayed on a vehicle.

The present disclosure has an effect of providing various information as well as advertisements by utilizing AR contents on an AR screen displayed on a vehicle.

The present disclosure has an effect of providing a system and service that allow an occupant to more efficiently encounter advertisements by providing advertising services to service provided to a vehicle.

The present disclosure has an effect of providing effective system and service capable of displaying AR advertising contents together with POI images capable of representing various information on an AR screen.

Effects that could be achieved with the present disclosure are not limited to those that have been described hereinabove merely by way of example, and other effects and advantages of the present disclosure will be more clearly understood from the following description by a person skilled in the art to which the present disclosure pertains.

### [Description of Drawings]

The accompanying drawings, which are included to provide a further understanding of the present disclosure and constitute a part of the detailed description, illustrate embodiments of the present disclosure and serve to explain technical features of the present disclosure together with the description.
FIG. 1 illustrates a vehicle according to an embodiment of the present disclosure.
FIG. 2 is a control block diagram of a vehicle according to an embodiment of the present disclosure.
FIG. 3 is a control block diagram of an autonomous device according to an embodiment of the present disclosure.
FIG. 4 illustrates a signal flow in an autonomous vehicle according to an embodiment of the present disclosure.
FIG. 5 illustrates interior of a vehicle according to an embodiment of the present disclosure.
FIG. 6 is a block diagram for explaining a cabin system for vehicle according to an embodiment of the present disclosure.
FIG. 7 is a diagram for explaining a usage scenario of a user in accordance with an embodiment of the present disclosure.
FIG. 8 is an example of V2X communication to which the present disclosure is applicable.
FIG. 9 illustrates a resource allocation method in a sidelink in which V2X is used.
FIG. 10 illustrates a procedure for a broadcast mode of V2X communication using PC5.
FIG. 11 illustrates a system for a vehicle AR screen according to a first embodiment of the present disclosure.
FIG. 12 illustrates a vehicle according to a first embodiment of the present disclosure.
FIG. 13 illustrates a first server according to a first embodiment of the present disclosure.
FIG. 14 illustrates a first area and a second area based on a driving section according to a first embodiment of the present disclosure.
FIGS. 15 to 20 illustrate an example of an AR screen according to a first embodiment of the present disclosure.
FIGS. 21 to 23 illustrate an architecture for a system for a vehicle AR screen according to a first embodiment of the present disclosure.
FIG. 24 illustrates an example of a method of providing an AR screen service for vehicle according to a second embodiment of the present disclosure.
FIG. 25 illustrates in more detail an example of a method of providing an AR screen service for vehicle according to a second embodiment of the present disclosure.
FIG. 26 illustrates in detail a step of receiving advertising data according to a second embodiment of the present disclosure.
FIGS. 27 to 29 illustrate in detail a step of generating first data for an AR screen according to a second embodiment of the present disclosure.
FIG. 30 illustrates a method of providing an AR screen service for vehicle according to a second embodiment of the present disclosure from a system perspective.

### [Best Mode]

Reference will now be made in detail to embodiments of the disclosure, examples of which are illustrated in the accompanying drawings. Wherever possible, the same reference numbers will be used throughout the drawings to refer to the same or like parts. In general, a suffix such as "module" and "unit" may be used to refer to elements or components. Use of such a suffix herein is merely intended to facilitate description of the present disclosure, and the suffix itself is not intended to give any special meaning or function. It will be noted that a detailed description of known arts will be omitted if it is determined that the detailed description of the known arts can obscure the embodiments of the disclosure. The accompanying drawings are used to help easily understand various technical features and it should be understood that embodiments presented herein are not limited by the accompanying drawings. As such, the present disclosure should be construed to extend to any alterations, equivalents and substitutes in addition to those which are particularly set out in the accompanying drawings.

The terms including an ordinal number such as first, second, etc. may be used to describe various components, but the components are not limited by such terms. The terms are used only for the purpose of distinguishing one component from other components.

When any component is described as "being connected" or "being coupled" to other component, this should be understood to mean that another component may exist between them, although any component may be directly connected or coupled to the other component. In contrast, when any component is described as "being directly connected" or "being directly coupled" to other component, this should be understood to mean that no component exists between them.

A singular expression can include a plural expression as long as it does not have an apparently different meaning in context.

In the present disclosure, terms "include" and "have" should be understood to be intended to designate that illustrated features, numbers, steps, operations, components, parts or combinations thereof are present and not to preclude the existence of one or more different features, numbers, steps, operations, components, parts or combinations thereof, or the possibility of the addition thereof.

### Driving

### (1) Exterior of Vehicle

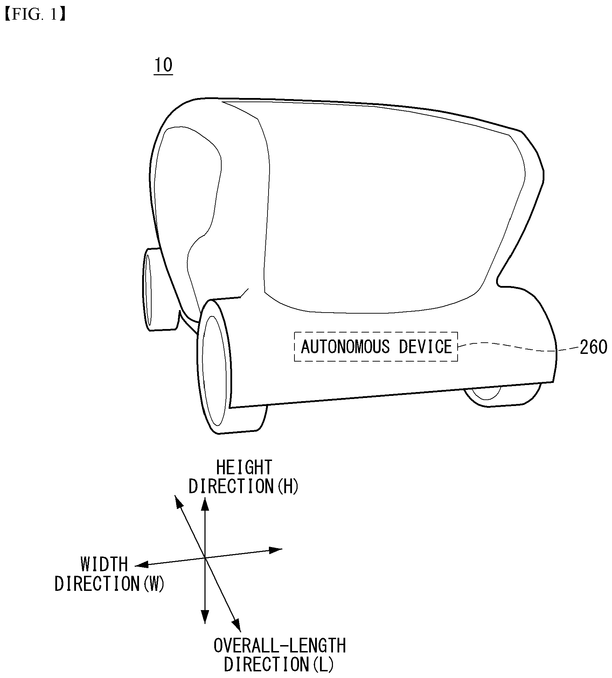

FIG. 1 illustrates a vehicle according to an embodiment of the present disclosure.

Referring to FIG. 1, a vehicle 10 according to an embodiment of the present disclosure is defined as a transportation means traveling on roads or railroads. The vehicle 10 includes a car, a train, and a motorcycle. The vehicle 10 may include an internal-combustion engine vehicle having an engine as a power source, a hybrid vehicle having an engine and a motor as a power source, and an electric vehicle having an electric motor as a power source. The vehicle 10 may be a private own vehicle. The vehicle 10 may be a shared vehicle. The vehicle 10 may be an autonomous vehicle.

### (2) Components of Vehicle

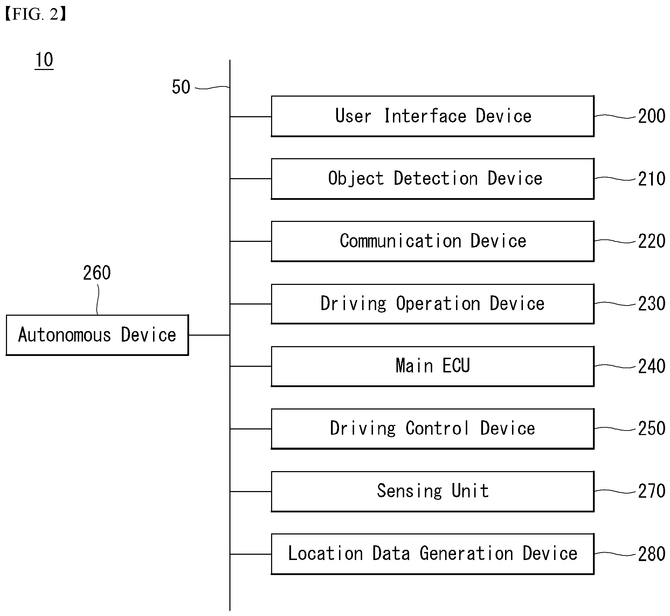

FIG. 2 is a control block diagram of a vehicle according to an embodiment of the present disclosure.

Referring to FIG. 2, a vehicle 10 may include a user interface device 200, an object detection device 210, a communication device 220, a driving operation device 230, a main ECU 240, a driving control device 250, an autonomous device 260, a sensing unit 270, and a location data generation device 280. Each of the object detection device 210, the communication device 220, the driving operation device 230, the main ECU 240, the driving control device 250, the autonomous device 260, the sensing unit 270, and the location data generation device 280 may be implemented as an electronic device which generates electric signals and exchange the electric signals from one another.

### 1) User Interface Device

The user interface device 200 is a device for communication between the vehicle 10 and a user. The user interface device 200 may receive a user input and provide information generated in the vehicle 10 to the user. The vehicle 10 may implement a user interface (UI) or user experience (UX) through the user interface device 200. The user interface device 200 may include an input device, an output device, and a user monitoring device.

### 2) Object Detection Device

The object detection device 210 may generate information about objects outside the vehicle 10. The information about objects may include at least one of information on presence or absence of the object, location information of the object, information on a distance between the vehicle 10 and the object, and information on a relative speed of the vehicle 10 with respect to the object. The object detection device 210 may detect objects outside the vehicle 10. The object detection device 210 may include at least one sensor which may detect objects outside the vehicle 10. The object detection device 210 may include at least one of a camera, a radar, a lidar, an ultrasonic sensor, and an infrared sensor. The object detection device 210 may provide data for an object generated based on a sensing signal generated from a sensor to at least one electronic device included in the vehicle.

### 2.1) Camera

The camera can generate information about objects outside the vehicle 10 using images. The camera may include at least one lens, at least one image sensor, and at least one processor which is electrically connected to the image sensor, processes received signals and generates data about objects based on the processed signals.

The camera may be at least one of a mono camera, a stereo camera and an around view monitoring (AVM) camera. The camera can acquire location information of objects, information on distances to objects, or information on relative speeds with respect to objects using various image processing algorithms. For example, the camera can acquire information on a distance to an object and information on a relative speed with respect to the object from an acquired image based on change in the size of the object over time. For example, the camera may acquire information on a distance to an object and information on a relative speed with respect to the object through a pin-hole model, road profiling, or the like. For example, the camera may acquire information on a distance to an object and information on a relative speed with respect to the object from a stereo image acquired from a stereo camera based on disparity information.

The camera may be attached at a portion of the vehicle at which FOV (field of view) can be secured in order to photograph the outside of the vehicle. The camera may be disposed in proximity to the front windshield inside the vehicle in order to acquire front images of the vehicle. The camera may be disposed near a front bumper or a radiator grill. The camera may be disposed in proximity to a rear glass inside the vehicle in order to acquire rear view images of the vehicle. The camera may be disposed near a rear bumper, a trunk or a tail gate. The camera may be disposed in proximity to at least one of side windows inside the vehicle in order to acquire side view images of the vehicle. Alternatively, the camera may be disposed near a side mirror, a fender or a door.

### 2.2) Radar

The radar can generate information on an object outside the vehicle using electromagnetic waves. The radar may include an electromagnetic wave transmitter, an electromagnetic wave receiver, and at least one processor which is electrically connected to the electromagnetic wave transmitter and the electromagnetic wave receiver, processes received signals and generates data about an object based on the processed signals. The radar may be implemented as a pulse radar or a continuous wave radar in terms of electromagnetic wave emission. The continuous wave radar may be implemented as a frequency modulated continuous wave (FMCW) radar or a frequency shift keying (FSK) radar according to signal waveform. The radar can detect an object by means of electromagnetic waves based on a time of flight (TOF) method or a phase shift method, and detect a location of the detected object, a distance to the detected object, and a relative speed with respect to the detected object. The radar may be disposed at an appropriate location outside the vehicle in order to detect objects positioned in front of, behind or on the side of the vehicle.

### 2.3) Lidar

The lidar can generate information about an object outside the vehicle 10 using a laser beam. The lidar may include a light transmitter, a light receiver, and at least one processor which is electrically connected to the light transmitter and the light receiver, processes received signals and generates data about an object based on the processed signal. The lidar may be implemented by the TOF method or the phase shift method. The lidar may be implemented in a driven type or a non-driven type. A driven type lidar may be rotated by a motor and detect an object around the vehicle 10. A non-driven type lidar may detect an object positioned within a predetermined range from the vehicle according to light steering. The vehicle 10 may include a plurality of non-drive type lidars. The lidar can detect an object be means of laser beams based on the TOF method or the phase shift method and detect the location of the detected object, a distance to the detected object, and a relative speed with respect to the detected object. The lidar may be disposed at an appropriate location outside the vehicle in order to detect objects positioned in front of, behind or on the side of the vehicle.

### 3) Communication Device

The communication device 220 can exchange signals with devices disposed outside the vehicle 10. The communication device 220 can exchange signals with at least one of infrastructure (e.g., a server and a broadcast station), another vehicle, and a terminal. The communication device 220 may include a transmission antenna, a reception antenna, and at least one of a radio frequency (RF) circuit and an RF element, which can implement various communication protocols, in order to perform communication.

The communication device 220 can exchange signals with external devices using vehicle-to-vehicle (V2V) communication technology. The V2V communication may be provided via PC5 interface and/or Uu interface.

The next generation radio access technology may be referred to as new radio access technology (RAT) or new radio (NR). Even in NR, the V2V communication can be supported.

5G NR is a subsequent technology of LTE-A, and is a mobile communication system of new clean-slate type with characteristics such as high capability, low latency, and high flexibility. The 5G NR can utilize all of available spectrum resources including a low frequency band less than 1 GHz, a middle frequency band of 1 GHz to 10 GHz, a high frequency (millimeter) band of 24 GHz or more, etc.

For the clear explanation, the present disclosure is described focusing on LTE-A or 5G NR, but the technical spirit of the present disclosure is not limited thereto.

For example, the communication device may exchange signals with the external devices based on C-V2X (cellular V2X). For example, the C-V2X can include sidelink communication based on LTE and/or sidelink communication based on NR.

For example, the communication device may exchange signals with the external devices based on dedicated short range communications (DSRC) or wireless access in vehicular environment (WAVE) standards based on IEEE 802.11P PHY/MAC layer technology and IEEE 1609 Network/Transport layer technology. The DSRC (or WAVE standards) is communication specifications for providing an intelligent transport system (ITS) service via short-range dedicated communication between vehicle-mounted devices or between a roadside device and a vehicle-mounted device. The DSRC may be a communication scheme that can use a frequency of 5.9 GHz and have a data transfer rate in the range of 3 Mbps to 27 Mbps. IEEE 802.11p may be combined with IEEE 1609 to support DSRC (or WAVE standards).

The communication device according to the present disclosure can exchange signals with the external devices using only one of C-V2X and DSRC. Alternatively, the communication device according to the present disclosure can exchange signals with the external devices using a hybrid of C-V2X and DSRC.

### 4) Driving Operation Device

The driving operation device 230 is a device for receiving user input for driving. In a manual mode, the vehicle 10 may be driven based on a signal provided by the driving operation device 230. The driving operation device 230 may include a steering input device (e.g., a steering wheel), an acceleration input device (e.g., an acceleration pedal), and a brake input device (e.g., a brake pedal).

### 5) Main ECU

The main ECU 240 can control the overall operation of at least one electronic device included in the vehicle 10.

### 6) Driving Control Device

The driving control device 250 is a device for electrically controlling various vehicle driving devices included in the vehicle 10. The driving control device 250 may include a power train driving control device, a chassis driving control device, a door/window driving control device, a safety device driving control device, a lamp driving control device, and an air-conditioner driving control device. The power train driving control device may include a power source driving control device and a transmission driving control device. The chassis driving control device may include a steering driving control device, a brake driving control device, and a suspension driving control device. The safety device driving control device may include a seat belt driving control device for seat belt control.

The driving control device 250 includes at least one electronic control device (e.g., a control electronic control unit (ECU)).

The driving control device 250 can control vehicle driving devices based on signals received by the autonomous device 260. For example, the driving control device 250 can control a power train, a steering device and a brake device based on signals received by the autonomous device 260.

### 7) Autonomous Device

The autonomous device 260 can generate a route for self-driving based on acquired data. The autonomous device 260 can generate a driving plan for traveling along the generated route. The autonomous device 260 can generate a signal for controlling movement of the vehicle according to the driving plan. The autonomous device 260 can provide the signal to the driving control device 250.

The autonomous device 260 can implement at least one advanced driver assistance system (ADAS) function. The ADAS can implement at least one of adaptive cruise control (ACC), autonomous emergency braking (AEB), forward collision warning (FCW), lane keeping assist (LKA), lane change assist (LCA), target following assist (TFA), blind spot detection (BSD), high beam assist (HBA), auto parking system (APS), a PD collision warning system, traffic sign recognition (TSR), traffic sign assist (TSA), night vision (NV), driver status monitoring (DSM), and traffic jam assist (TJA).

The autonomous device 260 can perform switching from a self-driving mode to a manual driving mode or switching from the manual driving mode to the self-driving mode. For example, the autonomous device 260 can switch the mode of the vehicle 10 from the self-driving mode to the manual driving mode or from the manual driving mode to the self-driving mode based on a signal received from the user interface device 200.

### 8) Sensing Unit

The sensing unit 270 can detect a state of the vehicle. The sensing unit 270 may include at least one of an internal measurement unit (IMU) sensor, a collision sensor, a wheel sensor, a speed sensor, an inclination sensor, a weight sensor, a heading sensor, a location module, a vehicle forward/backward movement sensor, a battery sensor, a fuel sensor, a tire sensor, a steering sensor, a temperature sensor, a humidity sensor, an ultrasonic sensor, an illumination sensor, and a pedal position sensor. Further, the IMU sensor may include one or more of an acceleration sensor, a gyro sensor, and a magnetic sensor.

The sensing unit 270 can generate vehicle state data based on a signal generated from at least one sensor. The vehicle state data may be information generated based on data detected by various sensors included in the vehicle. The sensing unit 270 may generate vehicle attitude data, vehicle motion data, vehicle yaw data, vehicle roll data, vehicle pitch data, vehicle collision data, vehicle orientation data, vehicle angle data, vehicle speed data, vehicle acceleration data, vehicle tilt data, vehicle forward/backward movement data, vehicle weight data, battery data, fuel data, tire pressure data, vehicle internal temperature data, vehicle internal humidity data, steering wheel rotation angle data, vehicle external illumination data, data of a pressure applied to an acceleration pedal, data of a pressure applied to a brake panel, etc.

### 9) Location Data Generation Device

The location data generation device 280 can generate location data of the vehicle 10. The location data generation device 280 may include at least one of a global positioning system (GPS) and a differential global positioning system (DGPS). The location data generation device 280 can generate location data of the vehicle 10 based on a signal generated from at least one of the GPS and the DGPS. According to an embodiment, the location data generation device 280 can correct location data based on at least one of the inertial measurement unit (IMU) sensor of the sensing unit 270 and the camera of the object detection device 210. The location data generation device 280 may also be called a global navigation satellite system (GNSS).

The vehicle 10 may include an internal communication system 50. The plurality of electronic devices included in the vehicle 10 may exchange signals through the internal communication system 50. The signals may include data. The internal communication system 50 may use at least one communication protocol (e.g., CAN, LIN, FlexRay, MOST or Ethernet).

### (3) Components of Autonomous Device

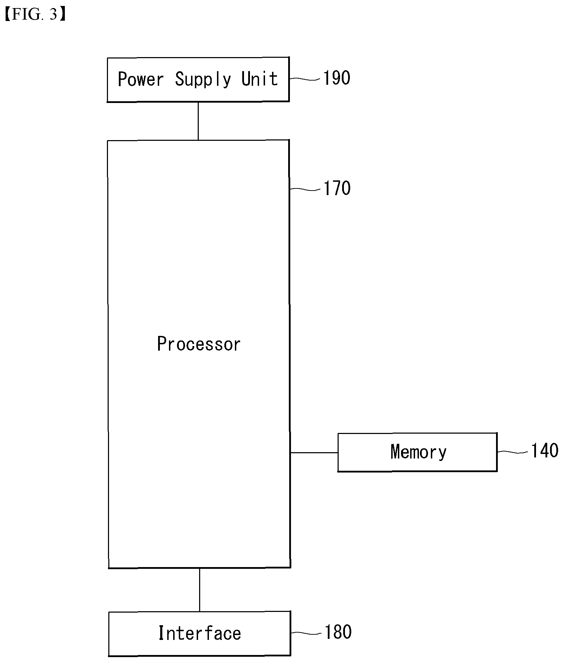

FIG. 3 is a control block diagram of an autonomous device according to an embodiment of the present disclosure.

Referring to FIG. 3, the autonomous device 260 may include a memory 140, a processor 170, an interface 180, and a power supply unit 190.

The memory 140 is electrically connected to the processor 170. The memory 140 can store basic data for units, control data for operation control of units, and input/output data. The memory 140 can store data processed in the processor 170. Hardware-wise, the memory 140 may be configured as at least one of a ROM, a RAM, an EPROM, a flash drive and a hard drive. The memory 140 may store various types of data for overall operation of the autonomous device 260, such as a program for processing or control of the processor 170. The memory 140 may be integrated with the processor 170. According to an embodiment, the memory 140 may be categorized as a subcomponent of the processor 170.

The interface 180 may exchange signals with at least one electronic device included in the vehicle 10 in a wired or wireless manner. The interface 180 may exchange signals with at least one of the object detection device 210, the communication device 220, the driving operation device 230, the main ECU 240, the driving control device 250, the sensing unit 270 and the location data generation device 280 in a wired or wireless manner. The interface 180 may be configured using at least one of a communication module, a terminal, a pin, a cable, a port, a circuit, an element, and a device.

The power supply unit 190 may supply power to the autonomous device 260. The power supply unit 190 may be supplied with power from a power source (e.g., a battery) included in the vehicle 10 and may supply the power to each unit of the autonomous device 260. The power supply unit 190 may operate in response to a control signal supplied from the main ECU 240. The power supply unit 190 may include a switched-mode power supply (SMPS).

The processor 170 may be electrically connected to the memory 140, the interface 180, and the power supply unit 190 and exchange signals with these components. The processor 170 may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and electronic units for executing other functions.

The processor 170 may operate by power supplied from the power supply unit 190. The processor 170 may receive data, process the data, generate a signal and provide the signal in a state in which power is supplied.

The processor 170 may receive information from other electronic devices included in the vehicle 10 via the interface 180. The processor 170 may provide control signals to other electronic devices in the vehicle 10 via the interface 180.

The autonomous device 260 may include at least one printed circuit board (PCB). The memory 140, the interface 180, the power supply unit 190 and the processor 170 may be electrically connected to the PCB.

### (4) Operation of Autonomous Device

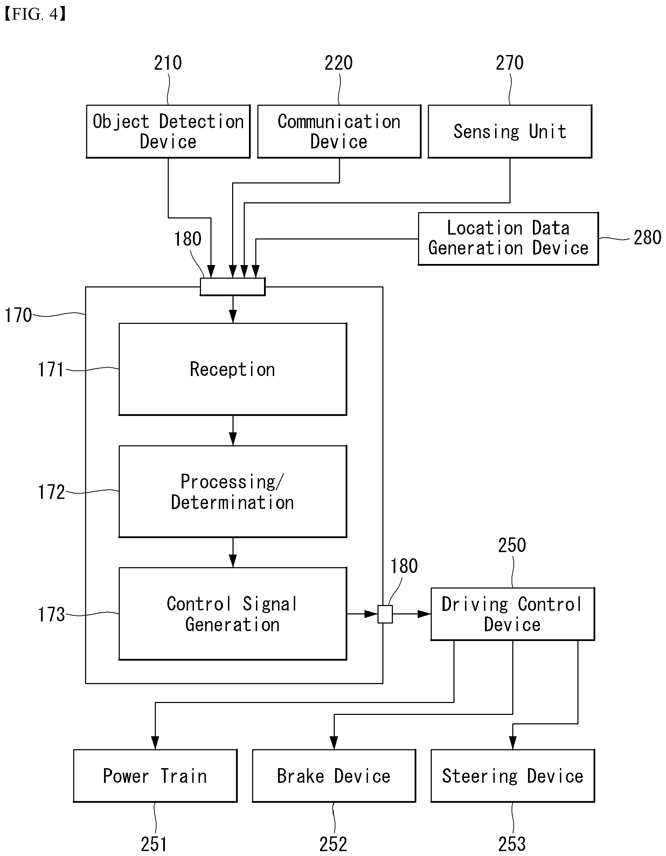

FIG. 4 illustrates a signal flow of an autonomous vehicle according to an embodiment of the present disclosure.

### 1) Reception operation

Referring to FIG. 4, the processor 170 may perform a reception operation. The processor 170 may receive data from at least one of the object detection device 210, the communication device 220, the sensing unit 270, and the location data generation device 280 via the interface 180. The processor 170 may receive object data from the object detection device 210. The processor 170 may receive HD map data from the communication device 220. The processor 170 may receive vehicle state data from the sensing unit 270. The processor 170 can receive location data from the location data generation device 280.

### 2) Processing/determination operation

The processor 170 may perform a processing/determination operation. The processor 170 may perform the processing/determination operation based on traveling situation information. The processor 170 may perform the processing/determination operation based on at least one of object data, HD map data, vehicle state data and location data.

### 2.1) Driving plan data generation operation

The processor 170 may generate driving plan data. For example, the processor 170 may generate electronic horizon data. The electronic horizon data can be understood as driving plan data in a range from a position at which the vehicle 10 is located to a horizon. The horizon can be understood as a point a predetermined distance before the position at which the vehicle 10 is located based on a predetermined traveling route. The horizon may refer to a point at which the vehicle can arrive after a predetermined time from the position at which the vehicle 10 is located along a predetermined traveling route.

The electronic horizon data can include horizon map data and horizon path data.

### 2.1.1) Horizon map data

The horizon map data may include at least one of topology data, road data, HD map data and dynamic data. According to an embodiment, the horizon map data may include a plurality of layers. For example, the horizon map data may include a first layer that matches the topology data, a second layer that matches the road data, a third layer that matches the HD map data, and a fourth layer that matches the dynamic data. The horizon map data may further include static object data.

The topology data may be explained as a map created by connecting road centers. The topology data is suitable for approximate display of a location of a vehicle and may have a data form used for navigation for drivers. The topology data may be understood as data about road information other than information on driveways. The topology data may be generated based on data received from an external server through the communication device 220. The topology data may be based on data stored in at least one memory included in the vehicle 10.

The road data may include at least one of road slope data, road curvature data and road speed limit data. The road data may further include no-passing zone data. The road data may be based on data received from an external server through the communication device 220. The road data may be based on data generated in the object detection device 210.

The HD map data may include detailed topology information in units of lanes of roads, connection information of each lane, and feature information for vehicle localization (e.g., traffic signs, lane marking/attribute, road furniture, etc.). The HD map data may be based on data received from an external server through the communication device 220.

The dynamic data may include various types of dynamic information which can be generated on roads. For example, the dynamic data may include construction information, variable speed road information, road condition information, traffic information, moving object information, etc. The dynamic data may be based on data received from an external server through the communication device 220. The dynamic data may be based on data generated in the object detection device 210.

The processor 170 can provide map data in a range from a position at which the vehicle 10 is located to the horizon.

### 2.1.2) Horizon path data

The horizon path data may be explained as a trajectory through which the vehicle 10 can travel in a range from a position at which the vehicle 10 is located to the horizon. The horizon path data may include data indicating a relative probability of selecting a road at a decision point (e.g., a fork, a junction, a crossroad, or the like). The relative probability may be calculated based on a time taken to arrive at a final destination. For example, if a time taken to arrive at a final destination is shorter when a first road is selected at a decision point than that when a second road is selected, a probability of selecting the first road can be calculated to be higher than a probability of selecting the second road.

The horizon path data may include a main path and a sub-path. The main path may be understood as a trajectory obtained by connecting roads having a high relative probability of being selected. The sub-path may be branched from at least one decision point on the main path. The sub-path may be understood as a trajectory obtained by connecting at least one road having a low relative probability of being selected at least one decision point on the main path.

### 3) Control signal generation operation

The processor 170 can perform a control signal generation operation. The processor 170 can generate a control signal based on the electronic horizon data. For example, the processor 170 may generate at least one of a power train control signal, a brake device control signal and a steering device control signal based on the electronic horizon data.

The processor 170 may transmit the generated control signal to the driving control device 250 via the interface 180. The driving control device 250 may transmit the control signal to at least one of a power train 251, a brake device 252, and a steering device 254.

### Cabin

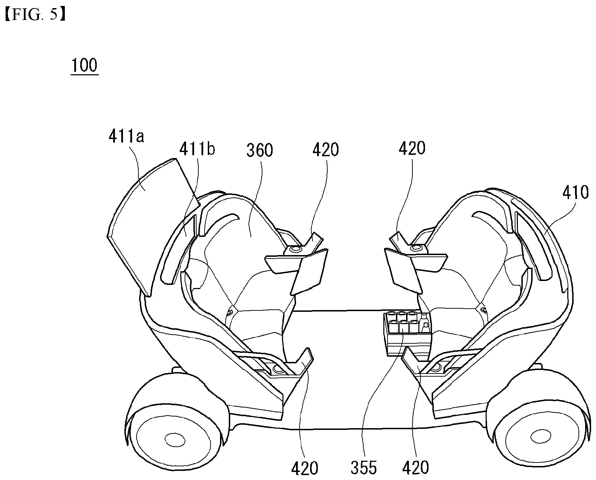

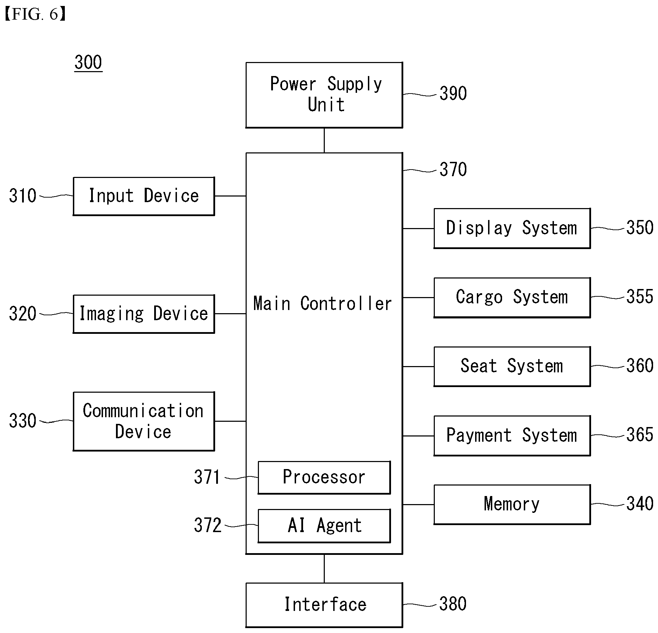

FIG. 5 illustrates interior of a vehicle according to an embodiment of the present disclosure. FIG. 6 is a block diagram for explaining a cabin system for vehicle according to an embodiment of the present disclosure.

### (1) Component of Cabin

Referring to FIGS. 5 and 6, a cabin system 300 for a vehicle (hereinafter, a cabin system) may be defined as a convenience system for a user who uses the vehicle 10. The cabin system 300 may be explained as a high-end system including a display system 350, a cargo system 355, a seat system 360 and a payment system 365. The cabin system 300 may include a main controller 370, a memory 340, an interface 380, a power supply unit 390, an input device 310, an imaging device 320, a communication device 330, the display system 350, the cargo system 355, the seat system 360 and the payment system 365. In another embodiment, the cabin system 300 may further include other components in addition to the components described in the present disclosure, or may not include some of the components described in the present disclosure.

### 1) Main controller

The main controller 370 may be electrically connected to the input device 310, the communication device 330, the display system 350, the cargo system 355, the seat system 360 and the payment system 365 and may exchange signals with these components. The main controller 370 can control the input device 310, the communication device 330, the display system 350, the cargo system 355, the seat system 360 and the payment system 365. The main controller 370 may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and electronic units for executing other functions.

The main controller 370 may consist of at least one sub-controller. In another embodiment, the main controller 370 may include a plurality of sub-controllers. The plurality of sub-controllers may individually control the devices and systems included in the cabin system 300. The devices and systems included in the cabin system 300 may be grouped based on function or grouped based on seats on which a user can sit.

The main controller 370 may include at least one processor 371. FIG. 6 illustrates that the main controller 370 includes one processor 371, by way of example. However, the main controller 371 may include a plurality of processors. The processor 371 may be categorized as one of the above-described sub-controllers.

The processor 371 may receive signals, information or data from a user terminal through the communication device 330. The user terminal may transmit signals, information or data to the cabin system 300.

The processor 371 may identify a user based on image data received from at least one of an internal camera and an external camera included in the imaging device. The processor 371 may identify a user by applying an image processing algorithm to the image data. For example, the processor 371 may identify a user by comparing information received from the user terminal with the image data. For example, the information may include at least one of route information, body information, fellow passenger information, baggage information, location information, preferred content information, preferred food information, disability information and use history information of a user.

The main controller 370 may include an artificial intelligence (AI) agent 372. The AI agent 372 can perform machine learning based on data acquired through the input device 310. The AI agent 371 can control at least one of the display system 350, the cargo system 355, the seat system 360 and the payment system 365 based on machine learning results.

### 2) Essential Components

The memory 340 is electrically connected to the main controller 370. The memory 340 can store basic data about units, control data for operation control of units, and input/output data. The memory 340 can store data processed in the main controller 370. Hardware-wise, the memory 340 may be configured using at least one of a ROM, a RAM, an EPROM, a flash drive and a hard drive. The memory 340 can store various types of data for the overall operation of the cabin system 300, such as a program for processing or control of the main controller 370. The memory 340 may be integrated with the main controller 370.

The interface 380 can exchange signals with at least one electronic device included in the vehicle 10 in a wired or wireless manner. The interface 380 may be configured using at least one of a communication module, a terminal, a pin, a cable, a port, a circuit, an element and a device.

The power supply unit 390 can provide power to the cabin system 300. The power supply unit 390 can be provided with power from a power source (e.g., a battery) included in the vehicle 10 and supply the power to each unit of the cabin system 300. The power supply unit 390 can operate according to a control signal supplied from the main controller 370. For example, the power supply unit 390 may be implemented as a switched-mode power supply (SMPS).

The cabin system 300 may include at least one printed circuit board (PCB). The main controller 370, the memory 340, the interface 380 and the power supply unit 390 may be mounted on at least one PCB.

### 3) Input Device

The input device 310 may receive a user input. The input device 310 may convert the user input into an electrical signal. The electrical signal converted by the input device 310 may be converted into a control signal and provided to at least one of the display system 350, the cargo system 355, the seat system 360 and the payment system 365. The main controller 370 or at least one processor included in the cabin system 300 may generate a control signal based on an electrical signal received from the input device 310.

The input device 310 may include at least one of a touch input unit, a gesture input unit, a mechanical input unit and a voice input unit. The touch input unit can convert a user's touch input into an electrical signal. The touch input unit may include at least one touch sensor for detecting a user's touch input. In some embodiments, the touch input unit may implement a touch screen by integrating with at least one display included in the display system 3 50. Such a touch screen can provide both an input interface and an output interface between the cabin system 300 and a user. The gesture input unit can convert a user's gesture input into an electrical signal. The gesture input unit may include at least one of an infrared sensor and an image sensor for detecting a user's gesture input. In some embodiments, the gesture input unit can detect a user's three-dimensional gesture input. To this end, the gesture input unit may include a plurality of light output units for outputting infrared light or a plurality of image sensors. The gesture input unit may detect a user's three-dimensional gesture input using TOF (Time of Flight), structured light or disparity. The mechanical input unit can convert a user's physical input (e.g., press or rotation) through a mechanical device into an electrical signal. The mechanical input unit may include at least one of a button, a dome switch, a jog wheel and a jog switch. Meanwhile, the gesture input unit and the mechanical input unit may be integrated. For example, the input device 310 may include a jog dial device that includes a gesture sensor and is formed such that it can be inserted/ejected into/from a part of a surrounding structure (e.g., at least one of a seat, an armrest and a door). When the jog dial device is parallel to the surrounding structure, the jog dial device can serve as a gesture input unit. When the jog dial device is protruded from the surrounding structure, the jog dial device can serve as a mechanical input unit. The voice input unit can convert a user's voice input into an electrical signal. The voice input unit may include at least one microphone. The voice input unit may include a beam forming MIC.

### 4) Imaging Device

The imaging device 320 may include at least one camera. The imaging device 320 may include at least one of an internal camera and an external camera. The internal camera may take an image of the inside of the cabin. The external camera may take an image of the outside of the vehicle. The internal camera can acquire an image of the inside of the cabin. The imaging device 320 may include at least one internal camera. It is desirable that the imaging device 320 include as many cameras as the number of passengers who can ride in the vehicle. The imaging device 320 can provide an image acquired by the internal camera. The main controller 370 or at least one processor included in the cabin system 300 can detect a motion of a user based on an image acquired by the internal camera, generate a signal based on the detected motion, and provide the signal to at least one of the display system 350, the cargo system 355, the seat system 360 and the payment system 365. The external camera can acquire an image of the outside of the vehicle. The imaging device 320 may include at least one external camera. It is desirable that the imaging device 320 include as many cameras as the number of doors through which passengers ride in the vehicle. The imaging device 320 can provide an image acquired by the external camera. The main controller 370 or at least one processor included in the cabin system 300 can acquire user information based on the image acquired by the external camera. The main controller 370 or at least one processor included in the cabin system 300 can authenticate a user or acquire body information (e.g., height information, weight information, etc.), fellow passenger information and baggage information of a user based on the user information.

### 5) Communication Device

The communication device 330 can exchange signals with external devices in a wireless manner. The communication device 330 can exchange signals with external devices via a network or directly exchange signals with external devices. The external devices may include at least one of a server, a mobile terminal and another vehicle. The communication device 330 may exchange signals with at least one user terminal. The communication device 330 may include an antenna and at least one of an RF circuit and an RF element which can implement at least one communication protocol in order to perform communication. In some embodiments, the communication device 330 may use a plurality of communication protocols. The communication device 330 may switch communication protocols according to a distance to a mobile terminal.

For example, the communication device can exchange signals with the external devices based on C-V2X (Cellular V2X). For example, the C-V2X may include sidelink communication based on LTE and/or sidelink communication based on NR.

For example, the communication device can exchange signals with external devices based on dedicated short range communications (DSRC) or Wireless Access in Vehicular Environment (WAVE) standards based on IEEE 802.11p PHY/MAC layer technology and IEEE 1609 Network/Transport layer technology. The DSRC (or WAVE standards) is communication specifications for providing an intelligent transport system (ITS) service via short-range dedicated communication between vehicle-mounted devices or between a roadside device and a vehicle-mounted device. The DSRC may be a communication scheme that can use a frequency of 5.9 GHz and have a data transfer rate in the range of 3 Mbps to 27 Mbps. IEEE 802.11p may be combined with IEEE 1609 to support DSRC (or WAVE standards).

The communication device according to the present disclosure may exchange signals with the external devices using only one of C-V2X and DSRC. Alternatively, the communication device according to the present disclosure may exchange signals with the external devices using a hybrid of C-V2X and DSRC.

### 6) Display System

The display system 350 can display graphic objects. The display system 350 may include at least one display device. For example, the display system 350 may include a first display device 410 for common use and a second display device 420 for individual use.

### 6.1) Common Display Device

The first display device 410 may include at least one display 411 which outputs visual content. The display 411 included in the first display device 410 may be implemented by at least one of a flat panel display, a curved display, a rollable display and a flexible display. For example, the first display device 410 may include a first display 411 which is positioned behind a seat and formed to be inserted/ejected into/from the cabin, and a first mechanism for moving the first display 411. The first display 411 may be disposed such that it can be inserted/ejected into/from a slot formed in a seat main frame. In some embodiments, the first display device 410 may further include a flexible area control mechanism. The first display may be formed to be flexible and a flexible area of the first display may be controlled according to user position. For example, the first display device 410 may be disposed on the ceiling inside the cabin and include a second display formed to be rollable and a second mechanism for rolling or unrolling the second display. The second display may be formed such that images can be displayed on both sides thereof. For example, the first display device 410 may be disposed on the ceiling inside the cabin and include a third display formed to be flexible and a third mechanism for bending or unbending the third display. In some embodiments, the display system 350 may further include at least one processor which provides a control signal to at least one of the first display device 410 and the second display device 420. The processor included in the display system 350 can generate a control signal based on a signal received from at last one of the main controller 370, the input device 310, the imaging device 320 and the communication device 330.

A display area of a display included in the first display device 410 may be divided into a first area 411a and a second area 411b. The first area 411a can be defined as a content display area. For example, the first area 411 may display at least one of graphic objects corresponding to can display entertainment content (e.g., movies, sports, shopping, food, etc.), video conferences, food menu and augmented reality screens. The first area 411a may display graphic objects corresponding to traveling situation information of the vehicle 10. The traveling situation information may include at least one of object information outside the vehicle, navigation information and vehicle state information. The object information outside the vehicle may include information on presence or absence of an object, positional information of an object, information on a distance between the vehicle and an object, and information on a relative speed of the vehicle with respect to an object. The navigation information may include at least one of map information, information on a set destination, route information according to setting of the destination, information on various objects on a route, lane information and information on the current position of the vehicle. The vehicle state information may include vehicle attitude information, vehicle speed information, vehicle tilt information, vehicle weight information, vehicle orientation information, vehicle battery information, vehicle fuel information, vehicle tire pressure information, vehicle steering information, vehicle indoor temperature information, vehicle indoor humidity information, pedal location information, vehicle engine temperature information, etc. The second area 411b may be defined as a user interface area. For example, the second area 411b may display an AI agent screen. The second area 411b may be located in an area defined by a seat frame according to an embodiment. In this case, a user can view content displayed in the second area 411b between seats. The first display device 410 may provide hologram content according to an embodiment. For example, the first display device 410 may provide hologram content for each of a plurality of users such that only a user who requests the content can view the content.

### 6.2) Display Device for Individual Use

The second display device 420 may include at least one display 421. The second display device 420 can provide the display 421 at a position at which only an individual passenger can view display content. For example, the display 421 may be disposed on an armrest of a seat. The second display device 420 can display graphic objects corresponding to personal information of a user. The second display device 420 may include as many displays 421 as the number of passengers who can ride in the vehicle. The second display device 420 can realize a touch screen by forming a layered structure along with a touch sensor or being integrated with the touch sensor. The second display device 420 can display graphic objects for receiving a user input for seat adjustment or indoor temperature adjustment.

### 7) Cargo System

The cargo system 355 can provide items to a user at the request of the user. The cargo system 355 can operate based on an electrical signal generated by the input device 310 or the communication device 330. The cargo system 355 can include a cargo box. The cargo box can be hidden in a part under a seat. When an electrical signal based on user input is received, the cargo box can be exposed to the cabin. The user can select a necessary item from articles loaded in the cargo box. The cargo system 355 may include a sliding moving mechanism and an item pop-up mechanism in order to expose the cargo box according to user input. The cargo system 355 may include a plurality of cargo boxes in order to provide various types of items. A weight sensor for determining whether each item is provided may be embedded in the cargo box.

### 8) Seat System

The seat system 360 can provide a user customized seat to a user. The seat system 360 can operate based on an electrical signal generated by the input device 310 or the communication device 330. The seat system 360 can adjust at least one element of a seat based on acquired user body data. The seat system 360 may include a user detection sensor (e.g., a pressure sensor) for determining whether a user sits on a seat. The seat system 360 may include a plurality of seats on which a plurality of users can sit. One of the plurality of seats can be disposed to face at least other seat. At least two users can set facing each other inside the cabin.

### 9) Payment System

The payment system 365 can provide a payment service to a user. The payment system 365 can operate based on an electrical signal generated by the input device 310 or the communication device 330. The payment system 365 can calculate a price for at least one service used by the user and request the user to pay the calculated price.

### (2) Autonomous Vehicle Usage Scenario

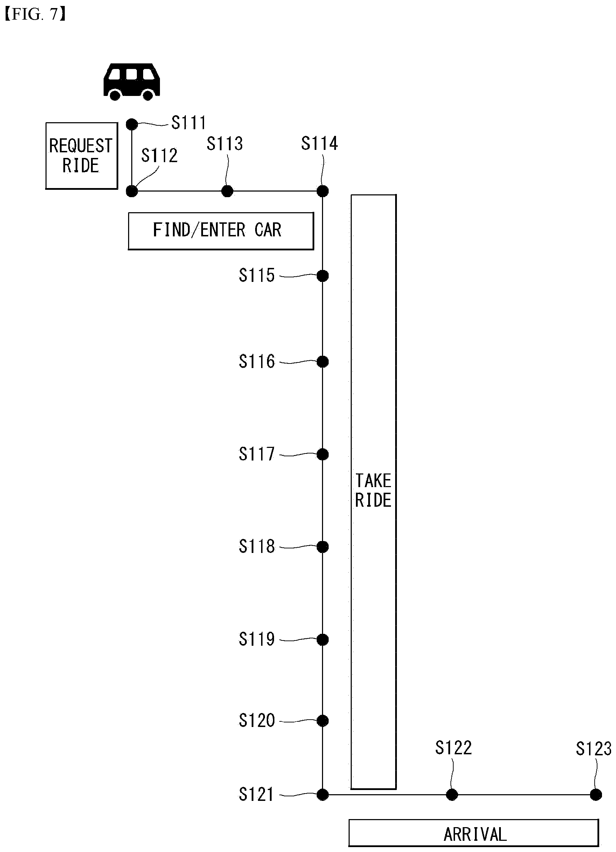

FIG. 7 is a diagram for explaining a usage scenario of a user in accordance with an embodiment of the present disclosure.

### 1) Destination Prediction Scenario

A first scenario S111 is a scenario for prediction of a destination of a user. An application which can operate in connection with the cabin system 300 can be installed in a user terminal. The user terminal can predict a destination of a user based on user's contextual information through the application. The user terminal can provide information on unoccupied seats in the cabin through the application.

### 2) Cabin Interior Layout Preparation Scenario

A second scenario S 112 is a cabin interior layout preparation scenario. The cabin system 300 may further include a scanning device for acquiring data about a user located outside the vehicle. The scanning device can scan a user to acquire body data and baggage data of the user. The body data and baggage data of the user can be used to set a layout. The body data of the user can be used for user authentication. The scanning device may include at least one image sensor. The image sensor can acquire a user image using light of the visible band or infrared band.

The seat system 360 can configure a cabin interior layout based on at least one of the body data and baggage data of the user. For example, the seat system 360 may provide a baggage compartment or a car seat installation space.

### 3) User Welcome Scenario

A third scenario S113 is a user welcome scenario. The cabin system 300 may further include at least one guide light. The guide light can be disposed on the floor of the cabin. When a user riding in the vehicle is detected, the cabin system 300 can turn on the guide light such that the user sits on a predetermined seat among a plurality of seats. For example, the main controller 370 may implement a moving light by sequentially turning on a plurality of light sources over time from an open door to a predetermined user seat.

### 4) Seat Adjustment Service Scenario

A fourth scenario S114 is a seat adjustment service scenario. The seat system 360 can adjust at least one element of a seat that matches a user based on acquired body information.

### 5) Personal Content Provision Scenario

A fifth scenario S115 is a personal content provision scenario. The display system 350 can receive user personal data through the input device 310 or the communication device 330. The display system 350 can provide content corresponding to the user personal data.

### 6) Item Provision Scenario

A sixth scenario S116 is an item provision scenario. The cargo system 355 can receive user data through the input device 310 or the communication device 330. The user data may include user preference data, user destination data, etc. The cargo system 355 can provide items based on the user data.

### 7) Payment Scenario

A seventh scenario S117 is a payment scenario. The payment system 365 can receive data for price calculation from at least one of the input device 310, the communication device 330 and the cargo system 355. The payment system 365 can calculate a price for use of the vehicle by the user based on the received data. The payment system 365 can request payment of the calculated price from the user (e.g., a mobile terminal of the user).

### 8) Display System Control Scenario of User

An eighth scenario S118 is a display system control scenario of a user. The input device 310 can receive a user input having at least one form and convert the user input into an electrical signal. The display system 350 can control displayed based on the electrical signal.

### 9) AI Agent Scenario

A ninth scenario 5119 is a multi-channel artificial intelligence (AI) agent scenario for a plurality of users. The AI agent 372 can distinguish an user input per each of a plurality of users. The AI agent 372 can control at least one of the display system 350, the cargo system 355, the seat system 360, and the payment system 365 in response to electrical signals obtained by converting an individual user input from the plurality of users.

### 10) Multimedia Content Provision Scenario for Multiple Users

A tenth scenario S120 is a multimedia content provision scenario for a plurality of users. The display system 350 can provide content that can be viewed by all users together. In this case, the display system 350 can individually provide the same sound to the plurality of users through speakers provided for respective seats. The display system 350 can provide content that can be individually viewed by the plurality of users. In this case, the display system 350 can provide individual sound through a speaker provided for each seat.

### 11) User Safety Secure Scenario

An eleventh scenario S121 is a user safety secure scenario. When information on an object around the vehicle which threatens a user is acquired, the main controller 370 can control an alarm with respect to the object around the vehicle to be output through the display system 350.

### 12) Personal Belongings Loss Prevention Scenario

A twelfth scenario S122 is a user's belongings loss prevention scenario. The main controller 370 can acquire data about user's belongings through the input device 310. The main controller 370 can acquire user motion data through the input device 310. The main controller 370 can determine whether the user exits the vehicle leaving the belongings in the vehicle based on the data about the belongings and the motion data. The main controller 370 can control an alarm with respect to the belongings to be output through the display system 350.

### 13) Alighting Report Scenario

A thirteenth scenario S123 is an alighting report scenario. The main controller 370 can receive alighting data of a user through the input device 310. After the user exits the vehicle, the main controller 370 can provide report data according to alighting to a mobile terminal of the user through the communication device 330. The report data may include data about a total charge for using the vehicle 10.

### Vehicle-to-Everything (V2X)

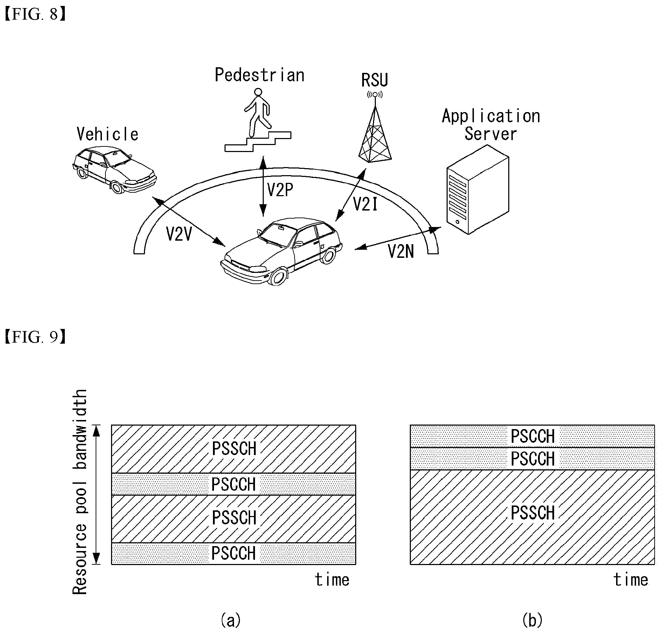

FIG. 8 is an example of V2X communication to which the present disclosure is applicable.

V2X communication includes communication between a vehicle and any entity, such as vehicle-to-vehicle (V2V) referring to communication between vehicles, vehicle-to-infrastructure (V2I) referring to communication between a vehicle and an eNB or a road side unit (RSU), vehicle-to-pedestrian (V2P) referring to communication between a vehicle and a UE carried by a person (e.g., pedestrian, bicycle driver, vehicle driver, or passenger), and vehicle-to-network (V2N).

The V2X communication may refer to the same meaning as V2X sidelink or NR V2X or refer to a wider meaning including V2X sidelink or NR V2X.

The V2X communication is applicable to various services such as forward collision warning, automated parking system, cooperative adaptive cruise control (CACC), control loss warning, traffic line warning, vehicle vulnerable safety warning, emergency vehicle warning, curved road traveling speed warning, and traffic flow control.

The V2X communication may be provided via a PC5 interface and/or a Uu interface. In this case, specific network entities for supporting communication between the vehicle and all the entities may be present in a wireless communication system supporting the V2X communication. For example, the network entity may be a BS (eNB), a road side unit (RSU), a UE, or an application server (e.g., traffic safety server), etc.

Further, the UE performing the V2X communication may refer to a vehicle UE (V-UE), a pedestrian UE, a BS type (eNB type) RSU, a UE type RSU, and a robot with a communication module as well as a handheld UE.

The V2X communication may be directly performed between UEs or performed through the network entities. V2X operation modes may be categorized based on a method of performing the V2X communication.

The V2X communication is required to support pseudonymity and privacy of LTEs when a V2X application is used so that an operator or a third party cannot track a LTE identifier within an area in which V2X is supported.

The terms frequently used in the V2X communication are defined as follows.
- Road Side Unit (RSU): the RSU is a V2X service enabled device which can perform transmission/reception with moving vehicles using a V2I service. In addition, the RSU is a fixed infrastructure entity supporting a V2X application and can exchange messages with other entities supporting the V2X application. The RSU is a term frequently used in the existing ITS specifications and is introduced to 3GPP specifications in order to allow documents to be able to be read more easily in ITS industry. The RSU is a logical entity which combines V2X application logic with the function of a BS (referred to as BS-type RSU) or a UE (referred to as UE-type RSU).
- V2I service: A type of V2X service having a vehicle as one side and an entity belonging to infrastructures as the other side.
- V2P service: A type of V2X service having a vehicle as one side and a device carried by a person (e.g., a pedestrian, a bicycle rider, a driver or a handheld UE device carried by a fellow passenger) as the other side.
- V2X service: A 3GPP communication service type related to a device performing transmission/reception to/from a vehicle.
- V2X enabled UE: UE supporting V2X service.
- V2V service: A V2X service type having vehicles as both sides.
- V2V communication range: A range of direct communication between two vehicles participating in V2V service.

V2X applications called V2X (Vehicle-to-Everything) include four types of (1) vehicle-to-vehicle (V2V), (2) vehicle-to-infrastructure (V2I), (3) vehicle-to-network (V2N) and (4) vehicle-to-pedestrian (V2P) as described above.

FIG. 9 illustrates a resource allocation method in a sidelink in which V2X is used.

On sidelink, different physical sidelink control channels (PSCCHs) may be spaced and allocated in the frequency domain, and different physical sidelink shared channels (PSSCHs) may be spaced and allocated. Alternatively, different PSCCHs may be continuously allocated in the frequency domain, and PSSCHs may also be continuously allocated in the frequency domain.

### NR V2X

To extend 3GPP platform to auto industry during 3GPP Release 14 and 15, support for V2V and V2X services has been introduced in LTE.

Requirements for support for enhanced V2X use cases are roughly arranged into four use example groups.
(1) Vehicle platooning enables dynamic formation of a platoon in which vehicles move together. All vehicles in a platoon obtain information from the leading vehicle in order to manage the platoon. Such information allows vehicles to travel in harmony rather than traveling in a normal direction and to move together in the same direction.
(2) Extended sensors allow vehicles, road side units, pedestrian devices and V2X application servers to exchange raw data or processed data collected through local sensors or live video images. A vehicle can enhance recognition of environment beyond a level that can be detected by a sensor thereof and can ascertain local circumstances more extensively and generally. A high data transfer rate is one of major characteristics.
(3) Advanced driving enables semi-automatic or full-automatic driving. Each vehicle and/or RSU share data recognized thereby and obtained from local sensors with a neighboring vehicle, and a vehicle can synchronize and adjust a trajectory or maneuver. Each vehicle shares driving intention with a neighboring traveling vehicle.
(4) Remote driving enables a remote driver or a V2X application to drive a remote vehicle for a passenger who cannot drive or cannot drive a remote vehicle in a dangerous environment. When changes are limited and routes can be predicted such as public transportation, driving based on cloud computing can be used. High reliability and low latency time are major requirements.

### Identifier for V2X communication via PCS

Each user equipment (UE) has a Layer-2 identifier for V2 communication via one or more PC5. This includes a source Layer-2 ID and a destination Layer-2 ID.

The source and destination Layer-2 IDs are included in a Layer-2 frame, and the Layer-2 frame is transmitted via a layer-2 link of PC5 identifying a source and a destination of Layer-2 on a frame.

The source and destination Layer-2 ID selection of a UE is based on a communication mode of the V2X communication of the PC5 of the layer-2 link. The source Layer-2 ID may differ between different communication modes.

If IP-based V2X communication is allowed, the UE is configured to use a link local IPv6 address as a source IP address. The LTE may use the IP address for V2X communication of PC5, even without sending a Neighbor Solicitation and Neighbor Advertisement message for searching for duplicate addresses.

If one UE has an active V2X application that requires personal information protection supported in a current geographic area, the source Layer-2 ID may change over time and may be randomized in order for a source LTE (e.g., vehicle) to be tracked or identified from another UE only for a certain time. In the case of IP-based V2X communication, the source IP address must also change over time and be randomized.

Changes in identifiers of the source LTE should be synchronized in a layer used for PC5. In other words, if an application layer identifier is changed, the source Layer-2 ID and the source IP address are also required to be changed.

### Broadcast Mode

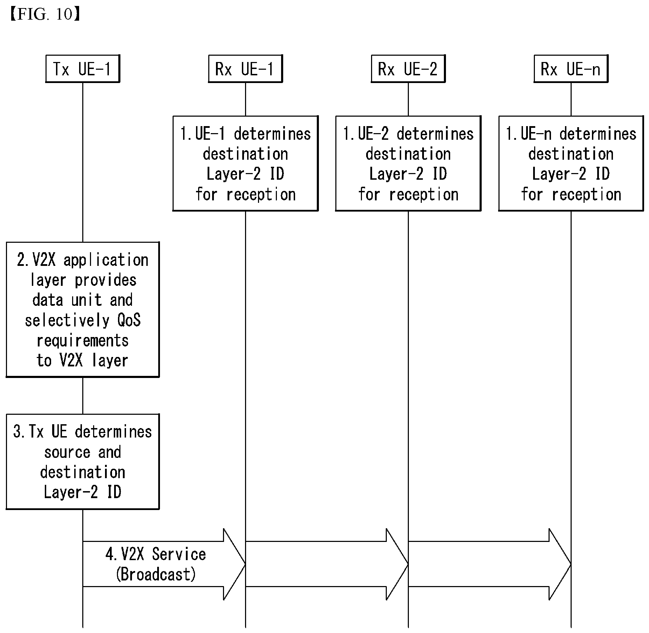

FIG. 10 illustrates a procedure for a broadcast mode of V2X communication using PC5.
1. A receiving UE determines a destination Layer-2 ID for broadcast reception. The destination Layer-2 ID is transmitted to an AS layer of the receiving UE for reception.
2. A V2X application layer of a transmitting UE may provide a data unit and provide V2X application requirements.
3. The transmitting UE determines the destination Layer-2 ID for broadcast. The transmitting UE self-assigns a source Layer-2 ID.
4. One broadcast message transmitted by the transmitting UE transmits V2X service data using the source Layer-2 ID and the destination Layer-2 ID.

### System for vehicle AR screen

A system for a vehicle AR screen according to a first embodiment of the present disclosure is described in detail below.

A vehicle described in the present disclosure may be a concept including all of an internal combustion engine vehicle with an engine as a power source, a hybrid vehicle with an engine and an electric motor as a power source, an electric vehicle with an electric motor as a power source, and the like.

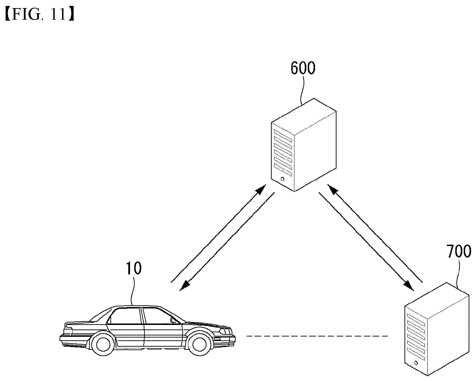

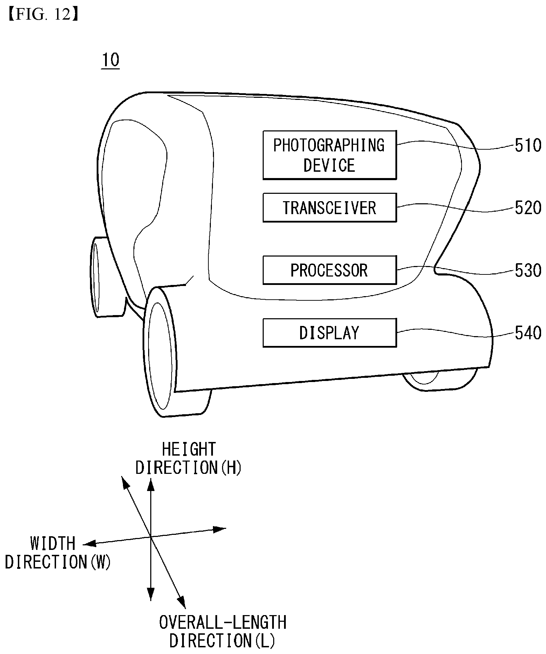

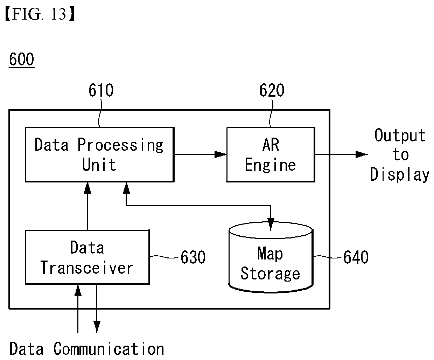

FIG. 11 illustrates a system for a vehicle AR screen according to a first embodiment of the present disclosure. FIG. 12 illustrates a vehicle according to a first embodiment of the present disclosure. FIG. 13 illustrates a first server according to a first embodiment of the present disclosure.

As illustrated in FIG. 11, a system for a vehicle AR screen according to a first embodiment of the present disclosure may include a vehicle 10, a first server 600, and a second server 700. The vehicle 10 may be a vehicle 10 including the autonomous device 260 described above. Alternatively, the vehicle 10 may be the cabin 100 described above. The first server 600 may generate an AR screen and transmit data on the generated AR screen to the vehicle 10. The second server 700 may be a service provider. Alternatively, the second server 700 may be a server that stores data received from a service provider and transmits the data to the first server 600.

The second server 700 may receive at least one type of an AR video or an AR image from the vehicle 10 and transmit advertising data corresponding to the received type to the first server 600.

The advertising data provided by the second server 700 may be advertising data for various companies or various fields. The advertising data provided by the second server 700 may be classified based on a category according to advertised target product or advertised target company.

A user may designate a category of advertising data through the vehicle 10. That is, the user may want to view advertisements of all categories, but the user may want to view only advertisements of a specific category. Thus, the user may designate a specific category and receive only advertising data for advertisements of the specific category through the vehicle 10.

The category designated by the user may be transmitted to the second server 700 through the vehicle 10. That is, the vehicle 10 may request the category designated by the user from the second server 700. The second server 700 may provide advertising data to the first server 600 based on the category requested from the vehicle 10. As a result, the vehicle 10 may display an AR screen including an AR video or an AR image of the category designated by the user.

As illustrated in FIG. 12, the vehicle 10 according to the first embodiment of the present disclosure may include a photographing device 510, a transceiver 520, a processor 530, and a display 530.

The photographing device 510 may include a camera for taking an external image for the AR screen. Further, the photographing apparatus 510 may be the object detection device 210 of the autonomous device 260 described above. The photographing device 510 may photograph the outside from a perspective of an occupant riding in the vehicle 10. The video or image taken by the photographing device 510 may be a background video or a background image for constituting the AR screen.

The transceiver 520 may be a device for using the V2V communication among the above-described V2X communication. In the case of the cabin 100, the transceiver 520 may be the above-described communication device 330.

The transceiver 520 may be configured to receive data for the AR screen from the first server 600 and transmit an external image taken by the photographing device 510 to the first server 600. Further, the transceiver 520 may perform communication between the vehicle 10 and the first server 600 or another server.

The transceiver 520 may perform transmission and reception of information with the vehicle 10 including a base station or a communication function via an antenna. Although not shown, the transceiver 520 may include a modulator, a demodulator, a signal processor, and the like.

Wireless communication used by the transceiver 520 may refer to communication using an existing communication facility installed by communication companies and a wireless communication network using frequencies of the existing communication facility. In this instance, the transceiver 520 may be used in various wireless communication systems such as code division multiple access (CDMA), frequency division multiple access (FDMA), time division multiple access (TDMA), orthogonal frequency division multiple access (OFDMA), and single carrier frequency division multiple access (SC-FDMA). In addition, the transceiver 520 may be used in 3rd generation partnership project (3GPP) long term evolution (LTE), etc.

The transceiver 520 may use not only 5G communication that is being commercialized recently, but also 6G that is scheduled to be commercialized in the future. However, the present disclosure may utilize a pre-installed communication network without being limited by these wireless communication methods.

The processor 530 may be the above-described main ECU 240 or the above-described processor 170. The processor 530 according to the first embodiment of the present disclosure may be a separate processor 530 that does not perform an operation necessary for driving. For convenience, the processor 530 in a system for an AR screen for vehicle is described using a separate reference numeral, but is not limited thereto.

Referring to FIG. 12, the processor 530 is a component capable of performing operations and controlling other devices. It may mainly mean a central processing unit (CPU), an application processor (AP), a graphics processing unit (GPU), or the like. The CPU, the AP or the GPU may include one or more cores therein, and the CPU, the AP or the GPU may operate using an operating voltage and a clock signal. However, the CPU or the AP may consist of a few cores optimized for serial processing, whereas the GPU may consist of thousands of smaller and more efficient cores designed for parallel processing. The processor 530 may be configured to display the AR screen on the display 530 of the vehicle 10.

The display 530 may be a display 530 included in a navigation system or a display 530 attached to a windshield of the vehicle 10. The display 530 may constitute the entire windshield. In addition, the display 530 may constitute the user interface device 200 described above, and may be a display 530 used in various locations in the cabin 100 as described above.

Referring to FIG. 13, the first server 600 according to the first embodiment of the present disclosure may include a data processing unit 610 for processing data input from the outside, a data transceiver 630 for communicating with the vehicle 10 or other servers, a map storage 640 for storing the processed data, and an AR engine 620 that generates an AR screen using the processed data.

The data processing unit 610 may reconstruct advertising data received from the second server 700 into an advertising video or an advertising image. The data processing unit 610 may process driving data received from the vehicle 10 to generate the AR screen. The data processing unit 610 may calculate a route to a destination based on the driving data to generate a navigation screen.

The data processing unit 610 may receive map information, dynamic information, vehicle sensor information, past record information, and other driving-related information.

The map information may include route information to a destination, a navigation route, route guide information, a front road shape, map property information (road properties, road types, lanes and/or road widths, road curvatures, road slopes, speed limit, etc.) and local information (landmark information, traffic signal information, etc.).

The dynamic information may include real-time traffic information, event information such as an accident, weather information, and information related to V2X (V2V, V2I).

The vehicle sensor information may include current location information of the vehicle 10, camera input information, and real-time surrounding situation information. The current location information may be coordinate information measured by GPS, etc. The camera input information may include ADAS information and object recognition information. The real-time surrounding situation information may be real-time surrounding situation information obtained via V2X (V2V, V2I).

The other driving-related information may include current driving mode information of the vehicle 10, destination or waypoint information of the vehicle 10, information about whether the vehicle 10 has entered a destination or a waypoint, information about whether the vehicle 10 has entered a parking lot, and the like.

The data processing unit 610 may generate and configure data to be displayed on the AR screen based on the route. As an area in which AR contents can be displayed, an AR wall, a POI image, etc. to be described later may be configured. The POI image may include POI summary information such as icons or speech bubbles. The POI image may also include long-distance POI information that is not present on the route but may be helpful for driving the vehicle.

The data processing unit 610 may determine the number of POI images to be exposed on the AR screen in real time based on a driving speed of the vehicle 10. The data processing unit 610 may calculate the possibility of risk during the driving of the vehicle 10 based on event information such as an accident, object recognition information, and the like, and determine the number of POI images based on it. For example, when there is a high risk during the driving of the vehicle 10, the occupant's view can be secured by reducing the number of POI images.

When visibility of the POI image is deteriorated due to data traffic (e.g., when the quality of the POI image is deteriorated), the data processing unit 610 may change a location at which the POI image is displayed. For example, the POI image with poor quality due to traffic may be arranged outside the display.

The data processing unit 610 may adjust the number or location of POI images displayed on the display considering driving speed, weather information, etc. However, the display disposed in the rear seat can display the POI image regardless of driving speed or weather information. For example, when the driving speed of the vehicle 10 exceeds a predetermined speed, the number of POI images displayed on the display may be reduced. Further, when the weather at the location where the vehicle 10 is driving is cloudy or raining, the number of POI images displayed on the display may be reduced.

The above description has been given focusing on the POI image, but is merely an example. For example, the above description can be understood even if the POI image is replaced by the AR content. That is, the above description has been given focusing on the POI image, but can be understood even if the POI image is replaced by the AR Wall, the AR video, or the AR image. This is apparent to those skilled in the art.

The AR engine 620 may generate the AR screen using a reconstructed advertising video or advertising image as the AR video or the AR image. The AR engine 620 may generate a first layer using a background video or a background image, a second layer using an advertising video or an advertising image, and a third layer on which traffic information or route guide, etc. and may overlap the respective layers to generate the AR screen. The AR screen generated by the AR engine 620 may be transmitted to the display 530 of the vehicle 10 and may be displayed on the display 530 of the vehicle 10.

The first server 600 may arrange a first area AR1 and/or a second area AR2 to be described below in a preset section of the driving section of the vehicle 10. In this instance, the first server 600 may arrange the second area AR2 in a remaining section except a driving section in which the first area AR1 is arranged.

The first server 600 may receive an external image from the photographing device 510 of FIG. 12 and arrange the first area AR1 and/or the second area AR2 to be described below in the preset section of the driving section of the vehicle 10 based on the received external image. In this instance, the preset section may start from a specific point in the driving section of the vehicle 10. The first server 600 may obtain information on the driving section of the vehicle 10 from the received external image.

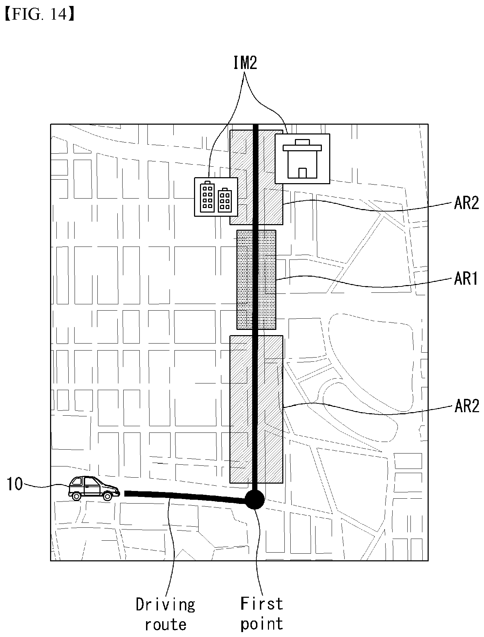

FIG. 14 illustrates a first area and a second area based on a driving section according to a first embodiment of the present disclosure.

As illustrated in FIG. 14, the vehicle 10 according to the present disclosure may receive a route from a current position to a destination from the outside. The route may be referred to as a driving route of the vehicle 10. When the vehicle 10 moves along the driving route, the first server 600 may generate a starting point for generating an AR screen. The first server 600 generates the AR screen from the starting point, which will be described below as a first point.

The first point is an arbitrarily set point and may be changed according to circumstances. The first point may be generated based on a criterion preset by the user. The first point may be a point spaced apart from the current position of the vehicle 10 by a predetermined distance. The first point may be any point on the driving route of the vehicle 10. The first point may be a point where a direction is changed in the driving route of the vehicle 10.

For example, the vehicle 10 may receive an expected route to the destination. The vehicle 10 may receive an expected route to turn left (or turn right) at an intersection. Based on a distance to the intersection, the first server 600 may display the AR screen from a driving route that is scheduled to turn left (or turn right) at the intersection. Thus, the first server 600 may designate a point with an intersection as the first point.

As illustrated in FIG. 14, the driving route of the vehicle 10 after the first point may include the first area AR1 and the second area AR2.

The first area AR1 may be an area in which a first AR content based on advertising data is displayed. The first AR content may include an advertising video or an advertising image generated in the data processing unit of FIG. 13. The first AR content may be generated by the first server 600 based on advertising data received from the second server 700. The first AR content may include an AR Wall including an advertising video or an advertising image. The AR Wall may be an AR video or an AR image generated in the form of a wall positioned around the road. The AR Wall may mean an area for covering buildings positioned around the road and displaying an advertising video or an advertising image instead of the buildings. To put it simply, the AR Wall is a virtual bulletin board created around the road, and AR content may be displayed on the virtual bulletin board. Thus, an occupant of the vehicle 10 may be easily exposed to advertisements while its driving is not disturbed.

The first area AR1 may be an area in which the AR Wall can be output or displayed. The first area AR1 may be defined as at least one of a section in which a length of a straight-line section is equal to or greater than a predetermined length, a section in which the vehicle 10 stops, a section in which a running speed of the vehicle 10 is equal to or greater than a predetermined speed, and a section in which a density of POIs is greater than a predetermined density.

The second area AR2 may be an area in which a second AR content based on location information is displayed. The second AR content may include a POI image IM2. The POI image IM2 may include trademarks, information, etc. related to an object positioned at a specific coordinate. In this instance, the location information may include not only location information of the vehicle 10 but also information about a location of a target to be displayed by the second AR content.

As illustrated in FIG. 14, the first area AR1 and the second area AR2 may be arranged along the driving section of the vehicle 10. The first area AR1 and the second area AR2 may be arranged along the driving section of the vehicle 10 after the first point. The POI image IM2 may be displayed in the second area AR2. The first area AR1 and the second area AR2 may be alternately arranged.

For example, the first server 600 may receive an external image from the vehicle 10 and define an empty space in the external image. The first server 600 may configure an AR screen to display an AR advertisement or an AR image in the empty space. The first server 600 may transmit the configured AR screen to the vehicle 10, and the vehicle 10 may display the AR screen on the display.

For example, the vehicle 10 may obtain an external image and define an empty space in the obtained external image. The vehicle 10 may request the first server 600 for an AR video or an AR image to be displayed in the empty space for a specific section. The first server 600 may configure an AR screen using the AR video or the AR image to be displayed in the empty space according to the request. The first server 600 may transmit the configured AR screen to the vehicle 10, and the vehicle 10 may display the AR screen on the display.

The empty space of the examples described above may indicate an area in which the first area AR1 and the second area AR2 are not arranged. Alternatively, the empty space of the examples described above may indicate an area in which only the first area AR1 is not arranged. That is, this is to effectively display AR advertisement even in the empty space where advertisement provided in advance is not arranged.

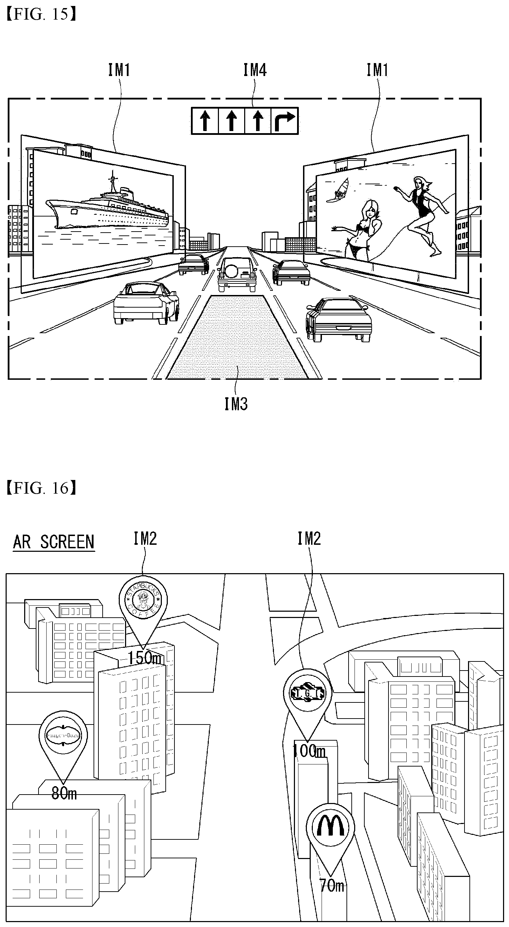

FIGS. 15 to 20 illustrate an example of an AR screen according to a first embodiment of the present disclosure.

FIGS. 15 to 20 illustrate merely respective examples. A person skilled in the art can combine FIGS. 15 to 20 to perform various applications, and it is obvious that various combinations can be clearly inferred from the present disclosure.

As illustrated in FIG. 15, an AR screen may include a plurality of AR images. The plurality of AR images may include a first AR content IM1, a route image IM3, and a guide image IM4. The route image IM3 may be an AR image indicating a lane in which the vehicle 10 is currently running. The guide image IM4 may be an AR image indicating a direction in which the vehicle 10 should go at an intersection or the like. The above images may be AR images, but may also be general images in some cases. This may be changed depending on a setting value of the user.

As illustrated in FIG. 15, the first AR content IM1 may be configured such that AR Walls are displayed on the left and right sides of the road. The AR Wall may display an advertising video or an advertising image generated based on advertising data received from the second server 700. The advertising video or the advertising image may be displayed in a preset size. The first AR content IM1 may be disposed so as not to cover other vehicles around the vehicle 10. The first AR content IM1 may be disposed so as not to cover other vehicles around the vehicle 10 but to cover buildings around the road.

As illustrated in FIG. 16, an AR screen may include a plurality of AR images. The plurality of AR images may include a second AR content. The second AR content may include a plurality of POI images IM2. The POI images IM2 may include a trademark image or a symbol image of a designated position. The POI images IM2 may include various images in addition to the trademark image or the symbol image. The second AR content may also be displayed on the left and right sides of the road or displayed on buildings positioned on the left and right sides of the road.

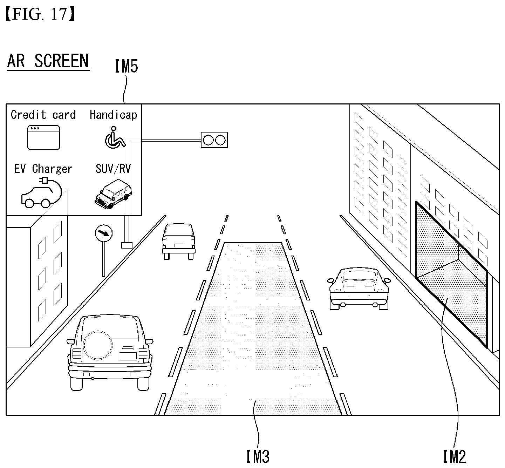

As illustrated in FIG. 17, an AR screen may include a plurality of AR images. The plurality of AR images may include a POI image IM2, an information image IM5 for a location indicated by the POI image IM2, and a route image IM3.

For example, when the location indicated by the POI image IM2 is a parking lot, the information image IM5 may display information related to the parking lot indicated by the POI image IM2. The information image IM5 for the parking lot may include information about whether credit card payment is available, whether disabled parking is available, whether electric charging is available, and whether SUV/RV vehicle parking is available.

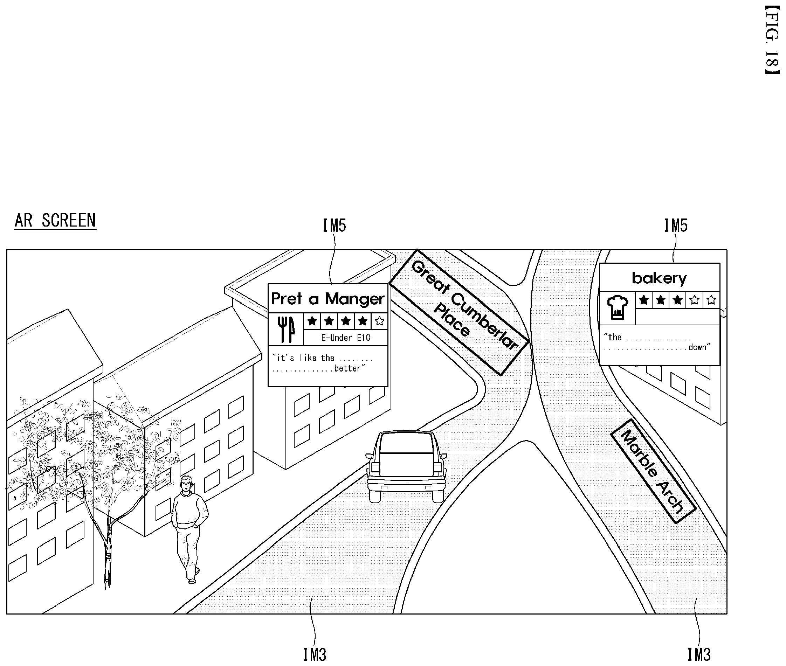

As illustrated in FIG. 18, an AR screen may include a plurality of AR images. The plurality of AR images may include a route image IM3 and an information image IM5. The route image IM3 may represent a plurality of routes. The plurality of routes may further include an image indicating a destination of each route.

For example, the information image IM5 may include information on a building that may be included in the AR screen or a store located in the building, etc. When information indicated by the information image IM5 is information for a restaurant, the information image IM5 may include images that visually represent visitors' reviews and ratings.

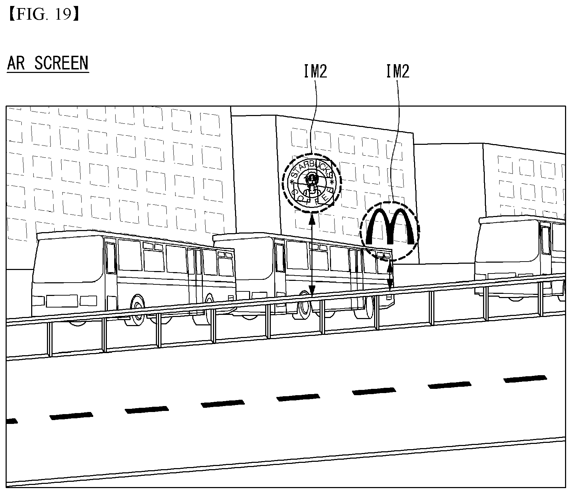

As illustrated in FIG. 19, an AR screen may include a plurality of AR images. The plurality of AR images may include a plurality of POI images IM2. The plurality of POI images IM2 may include a trademark image or a symbol image.

For example, when there is a median strip of a predetermined height in a driving section of the vehicle 10, the vehicle 10 may detect the median strip of the road using an object detection device, etc., and the plurality of POI images IM2 may be arranged so as not to overlap the median strip. That is, the plurality of POI images IM2 may be arranged to be spaced apart from the floor of the road by a height of the median strip.

The above example is described based on the median strip, but the same algorithm can be applied when an object having a predetermined height is detected in addition to the median strip. That is, when a bus is positioned on one side of the road, the plurality of POI images IM2 may be arranged to be spaced apart from the floor of the road by a height of the bus. That is, the plurality of POI images IM2 may be arranged so as not to overlap the bus.

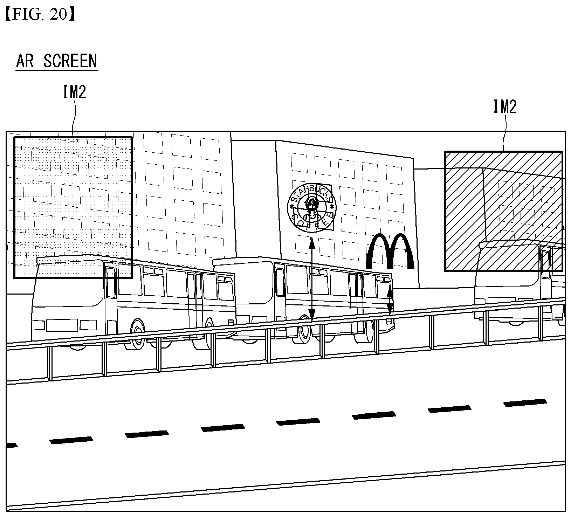

As illustrated in FIG. 20, an AR screen may include a plurality of AR images. The plurality of AR images may include a plurality of POI images IM2. The plurality of POI images IM2 may be differently displayed considering a difficulty of driving.

For example, the first server 600 may obtain an expected route of the vehicle 10 up to coordinates indicated by respective POI images IM2, and differently display the plurality of POI images IM2 based on the obtained predicted route. The first server 600 may obtain a driving difficulty in consideration of a distance to the destination, an estimated arrival time, the number of U-turns, and the like.

As illustrated in FIG. 20, the first server 600 may obtain the driving difficulty up to the coordinate indicated by the right POI image IM2. The first server 600 may obtain the driving difficulty up to the coordinate indicated by the left POI image IM2. In order for the vehicle 10 to reach the coordinate indicated by the left POI image IM2, after the vehicle 10 moves to a point where a U-turn is possible, the vehicle 10 has to make the U-turn and move to the opposite side. On the contrary, in order for the vehicle 10 to reach the coordinate indicated by the right POI image IM2, the vehicle 10 has to move forward a predetermined distance. After all, considering the distance, the arrival time, the number of U-turns, etc., the driving difficulty to the coordinate indicated by the right POI image IM2 is lower, and the driving difficulty to the coordinates indicated by the left POI image IM2 is higher. Thus, based on a preset criterion, the first server 600 may differently represent the two POI images IM2. Further, based on a preset criterion, the first server 600 may differently represent the POI images IM2 through various methods, such as differently representing colors of the two POI images IM2 or differently representing sizes of the two POI images IM2. For example, the first server 600 may classify the driving difficulty into high and low levels using a distance to the POI and an estimated arrival time, and display the POI images by changing the color or size of the POI images based on the driving difficulty.

The vehicle 10 may learn a driving habit, a pattern, etc. of a user (driver). The driving difficulty may be classified based on the learned driving habit, pattern, etc. of the user.

For example, the user inputs a destination into a navigation system of the vehicle 10 and searches for a route. In this case, the navigation system suggests various routes according to the destination to the user. The user may select any one of the various routes. The vehicle 10 may store any one of the various routes selected by the user. A trend of the route selected by the user may be derived from statistics. That is, whether the user mainly selects a route with the shortest time or a route with the shortest distance may be derived as statistics. The first server 600 may receive a result value derived as the statistics from the vehicle 10. The first server 600 may calculate the distance to the POI and the estimated arrival time based on the received result value.

For example, the user may prefer a POI having a specific attribute among various POIs. When the user (driver) is a woman, the user (driver) may mainly select a POI having a female-only parking lot among various POIs. The vehicle 10 may store a result of the user selecting any one of various POIs. This may be stored in the vehicle 10 or the like as statistics. That is, the trend of the POI selected by the user (driver) may be derived from statistics. Thus, the first server 600 may display the driving difficulty in consideration of a tendency for the POI selected by the user (driver) when displaying the driving difficulty. The first server 600 may configure a POI image including a female parking lot among various POIs to be different from other POI images (in color, size, etc.).

As a result of reviewing the above examples, when the first server 600 determines the driving difficulty based on behavior information of the user (driver), the driving difficulty may be calculated differently depending on a driving style of the user (driver). Thus, a weight may be set differently based on the behavior information that is the basis of the judgment.

Embodiment 1 is described in detail as follows.

It is assumed that a user (driver) rides in the vehicle 10 and is driving. The user wants to go to a cafe near where he or she is driving. In this case, the user may search for a nearby cafe through the AR service.

When two cafes (cafe A and cafe B) are found as a result of the search, the first server 600 may calculate a driving difficulty for each cafe. The first server 600 may obtain information that cafe A does not have a parking lot and cafe B has a parking lot. In this case, the first server 600 may brightly display a POI image representing the cafe B and darkly display a POI image representing the cafe A.

Embodiment 2 is described in detail as follows.

It is assumed that a user (driver) rides in the vehicle 10 and is driving. The user wants to go to a cafe near where he or she is driving. In this case, the user may search for a nearby cafe through the AR service.

When two cafes (cafe A and cafe B) are found as a result of the search, the first server 600 may calculate a driving difficulty for each cafe. The first server 600 may calculate the driving difficulty in consideration of a user's tendency. When the user searches for a route to a destination using the navigation system, the user has a tendency to mainly search for the shortest distance, and this tendency may be derived as statistics. In this case, the first server 600 may calculate the driving difficulty to the cafe A and the cafe B based on the shortest distance. The first server 600 may compare a first shortest distance from a current location of the vehicle 10 to the cafe A with a second shortest distance from the current location of the vehicle 10 to the cafe B. When the second shortest distance is shorter than the first shortest distance as a result of the comparison, the first server 600 may determine that the driving difficulty for the cafe B is lower than the cafe A, and may brightly display a POI image for the cafe B and darkly display a POI image for the cafe A.

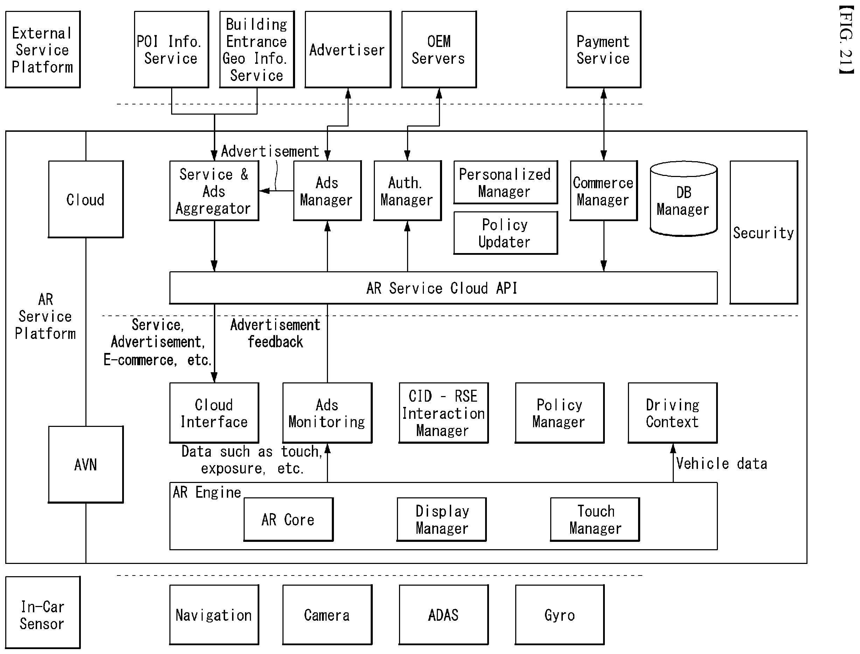

FIGS. 21 to 23 illustrate an architecture for a system for a vehicle AR screen according to a first embodiment of the present disclosure.

As illustrated in FIG. 21, an architecture for a system for an AR screen for the vehicle 10 may be classified into three of an external service platform, an AR service platform, and an in-car sensor.

The external service platform may provide POI Info. service and building entrance Geo Info. service. The POI Info. service may include a name, shopping mall information, a building location (coordinate information), etc. of a point that is a target of POI. The building entrance Geo Info. service may include a location (coordinate information) of a parking lot of a building or an entrance to the parking lot of the building.

The external service platform may provide advertising data through an advertiser and communicate with the AR service platform for certification of OEM servers. The external service platform may also provide payment service.

The AR service platform may include Cloud and AVN. The Cloud may include Service & Ads aggregator, Ads manager, Auth. manager, commerce manager, DB manager, personalized manager, policy updater, Security, and AR service Cloud API.

The Service & Ads aggregator may be linked with the external service platform and may aggregate advertisement information within the corresponding service. The Service & Ads aggregator may receive the advertisement information from the Ads manager. The Ads manager may store advertising data and manage a result of advertisements. The Service & Ads aggregator may transmit the aggregated advertising data to the AR service Cloud API. The AR service Cloud API may convert a format of the received advertising data into unified API format.

The Auth. manager may be a configuration for certification of OEM servers. The commerce manager may be provided with the payment service. The DB manager may store and manage authentication information, service information, and advertisement information. The Security may be a configuration for security through encryption of data.

The AR service Cloud API may provide service, advertisement, etc. to Cloud Interface of AVN. The AVN may receive a feedback about advertisement of the user through Ads monitoring and transmit the feedback to the Ads manager. The AVN may include CID - RSE interaction manager, policy manager, and driving context. The Ads monitoring may receive, from an AR Engine, data about the frequency of user's touch, the frequency at which advertisement is exposed to the user, and the like.

The AR Engine may include AR core, display manager, and touch manager. The AR core may be a configuration for generating an AR screen, and the display manager and the touch manager may manage how often an advertisement is displayed to the user, how often the user touches the advertisement, and so on.

The in-car sensor may include Navigation, Camera, ADAS, Gyro, and the like.

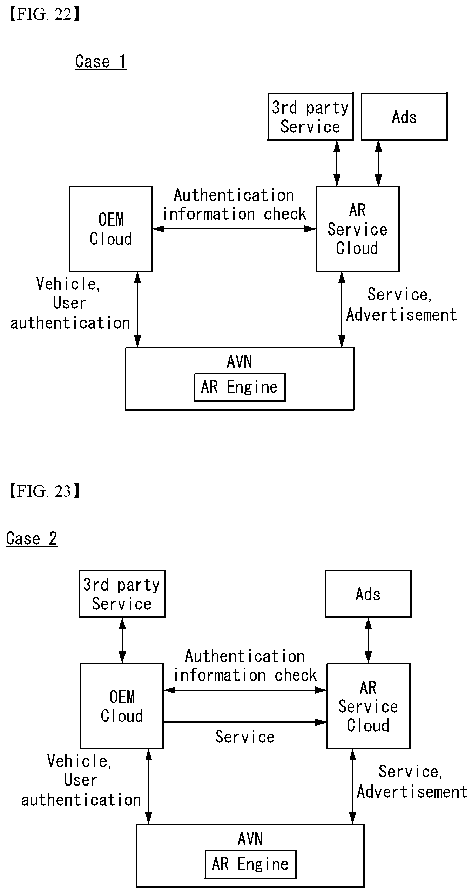

As illustrated in FIG. 22, the architecture for aggregating services in AR Service Cloud is illustrated. That is, advertising information is aggregated in the AR Service Cloud, and Service API for providing the aggregated advertising information to the AR engine may be provided. The OEM Cloud for external service may request the AR Service Cloud of authentication and check authentication information.

As illustrated in FIG. 22, the AR Service Cloud may communicate with 3rd party Service and transmit and receive Ads. The AR Service Cloud may aggregate the 3rd party Service and the Ads to transmit it to the AR Engine of the AVN and may receive a feedback from the AR Engine of the AVN. The OEM Cloud may receive authentication of vehicle and/or user from the AR Engine of the AVN. That is, the AR Service Cloud may link only authentication information with the OEM Cloud and may directly aggregate external service and advertisement to provide the API. The AR Engine of the AVN may also link user authentication information and vehicle information with the OEM Cloud, and may collect and store service usage information within the AR Service Cloud.

As illustrated in FIG. 23, the architecture aggregating services in AR Service Cloud is illustrated. That is, OEM Cloud may communicate with 3rd party Service, and the AR Service Cloud may transmit and receive Ads. In other words, unlike FIG. 22, the AR Service Cloud does not directly aggregate external service and advertisement and only adds advertisement to service received from the OEM Cloud. The OEM Cloud itself may provide advertisement.

### Method of providing AR screen service for vehicle

Hereinafter, a method of providing an AR screen service for vehicle according to a second embodiment of the present disclosure is described in detail based on the above-described contents as follows.

The second embodiment of the present disclosure will be described from a perspective of the first server of the first embodiment described above, but is not limited thereto.

In addition, the second embodiment of the present disclosure may be an operation capable of being performed by the first server of the first embodiment described above.

Hereinafter, contents of the second embodiment of the present disclosure that are the same as or overlapping with those of the first embodiment described above may be omitted and described for convenience.

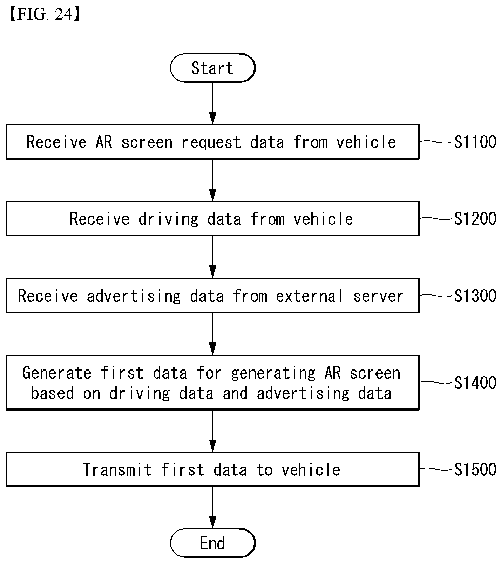

FIG. 24 illustrates an example of a method of providing an AR screen service for vehicle according to a second embodiment of the present disclosure.

As illustrated in FIG. 24, a method of providing an AR screen service for vehicle according to the second embodiment of the present disclosure may include a step S1100 of receiving AR screen request data from a vehicle 10, a step S1200 of receiving driving data from the vehicle 10, a step S1300 of receiving advertising data from an external server, a step S1400 of generating first data for an AR screen based on the driving data and the advertising data, and a step S1500 of transmitting the first data to the vehicle 10.

In the AR screen request data, when an occupant riding in the vehicle 10 requests an AR screen, the vehicle 10 may send an AR screen request message to the first server 600 so as to display the AR screen. In addition, when a preset condition pre-set in the vehicle 10 is achieved, the vehicle 10 may send an AR screen request message to the first server 600 so as to display the AR screen.

The driving data may mean all data obtained while the vehicle 10 is driving. The driving data may include video data or image data obtained by the photographing device 510. The driving data may include data obtained in real time. That is, the driving data may include speed information, acceleration information, direction information, and current location information of the vehicle 10. The driving data may also include traffic conditions on the road on which the vehicle 10 is driving, weather conditions where the vehicle 10 is driving, and the like.

The advertising data may be received from the external server. The external server may be the second server 700 described above. The advertising data may be stored in the second server 700 or may be the data transmitted via the second server 700. The advertising data may be the data related to an advertising video or an advertising image.

The first data may generate the AR screen based on the driving data and the advertising data. That is, the first data may be transmitted from the first server 600 to the vehicle 10, and the vehicle 10 may display the first data on the display 530. When the first data is displayed on the display 530, the AR screen including the advertising video or the advertising image may be displayed.

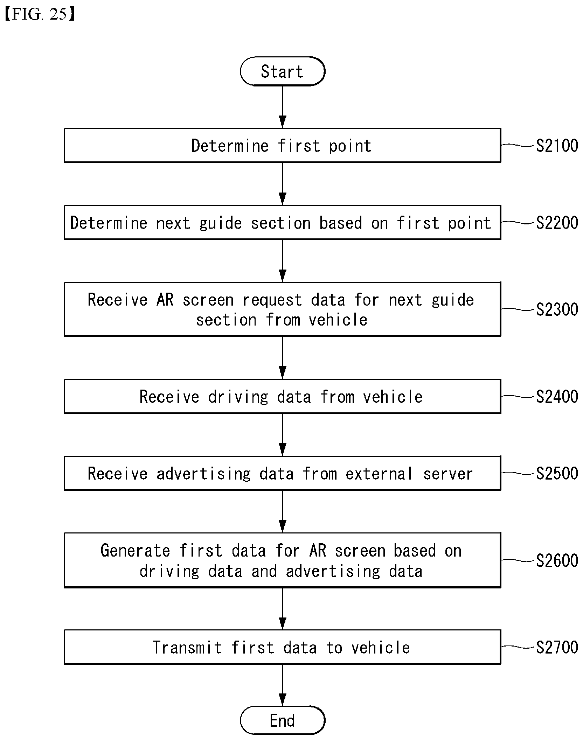

FIG. 25 illustrates in more detail an example of a method of providing an AR screen service for vehicle according to a second embodiment of the present disclosure.

As illustrated in FIG. 25, a method of providing an AR screen service for vehicle according to the second embodiment of the present disclosure may include a step S2100 of determining a first point, a step S2200 of determining a next guide section based on the first point, a step S2300 of receiving AR screen request data for the next guide section from a vehicle 10, a step S2400 of receiving driving data from the vehicle 10, a step S2500 of receiving advertising data from an external server, a step S2600 of generating first data for an AR screen based on the driving data and the advertising data, and a step S2700 of transmitting the first data to the vehicle 10. In the present disclosure, "determine" may be replaced by "designate", "select", "define", "obtain", "extract", etc.

The first point may mean the first point of the first embodiment described above. The next guide section may start from the first point. The AR screen may be configured based on the next guide section, and the first server 600 may arrange a first area AR1 in a part of the next guide section and arrange a second area AR2 in another part.

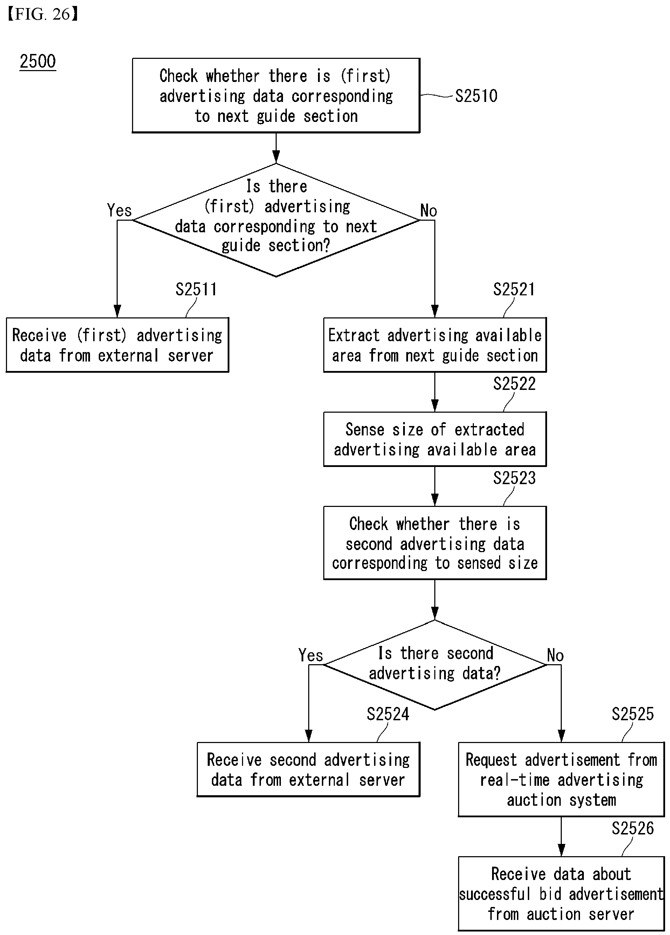

FIG. 26 illustrates in detail a step of receiving advertising data according to a second embodiment of the present disclosure.

As illustrated in FIG. 26, a step S2500 of receiving advertising data may include a step S2510 of checking whether there is (first) advertising data corresponding to the next guide section, and a step S2511 of receiving the (first) advertising data from an external server when there is the (first) advertising data corresponding to the next guide section.

As illustrated in FIG. 26, the step S2500 of receiving the advertising data may include a step S2510 of checking whether there is (first) advertising data corresponding to the next guide section, a step S2521 of extracting an advertising available area from the next guide section when there is the (first) advertising data corresponding to the next guide section, a step S2522 of sensing a size of the extracted advertising available area, and a step S2523 of checking whether there is second advertising data corresponding to the sensed size.

The step S2500 of receiving the advertising data may further include a step S2524 of receiving the second advertising data from the external server when there is the second advertising data. The step S2500 of receiving the advertising data may further include, when there is no second advertising data, a step S2525 of requesting an advertisement from a real-time advertising auction system and a step S2526 of receiving data for a successful bid advertisement from an auction server. That is, real-time advertisements may be displayed, and the real-time advertisements may include advertisements selected from a bidding (auction) system.

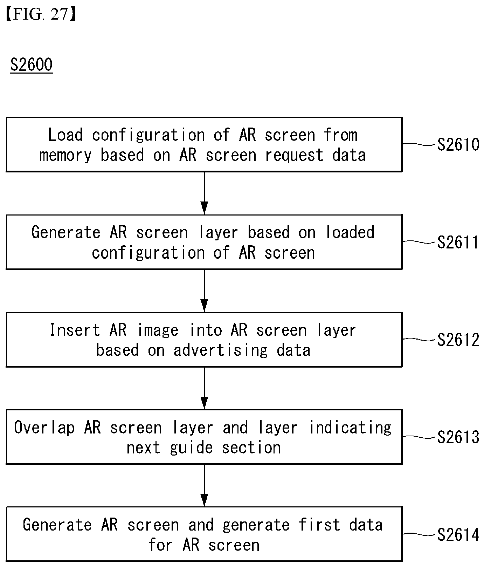

FIGS. 27 to 29 illustrate in detail a step of generating first data for an AR screen according to a second embodiment of the present disclosure.

As illustrated in FIG. 27, the step S2600 of generating the first data for the AR screen according to the second embodiment of the present disclosure may include a step S2610 of loading configuration of the AR screen from a memory based on the AR screen request data, a step S2611 of generating an AR screen layer based on the loaded configuration of the AR screen, a step S2612 of inserting an AR image into the AR screen layer based on the advertising data, a step S2613 of overlapping the AR screen layer on a layer indicating the next guide section, and a step S2614 of generating the AR screen and generating the first data for the AR screen.

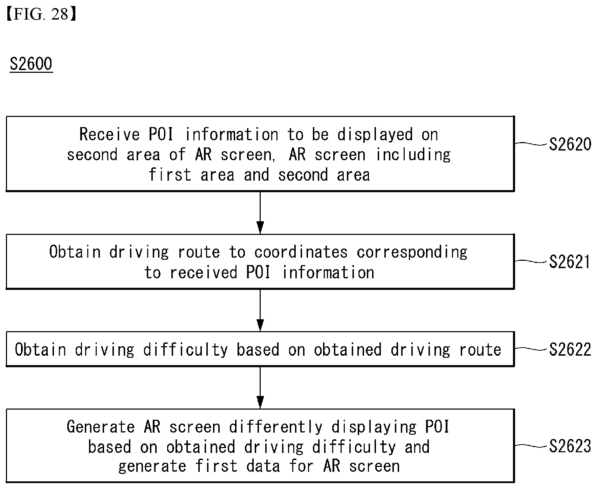

As illustrated in FIG. 28, the step S2600 of generating the first data for the AR screen according to the second embodiment of the present disclosure may include a step S2620 of receiving POI information to be displayed on a second area AR2 of the AR screen, the AR screen including a first area AR1 and the second area AR2, a step S2621 of obtaining a driving route to the coordinate corresponding to the received POI information, a step S2622 of obtaining a driving difficulty based on the obtained driving route, and a step S2623 of generating an AR screen differently displaying a POI based on the obtained driving difficulty and generating the first data for the AR screen.

The first data may be data for the AR screen. When the first data is input to the display 530, the AR screen may be displayed.

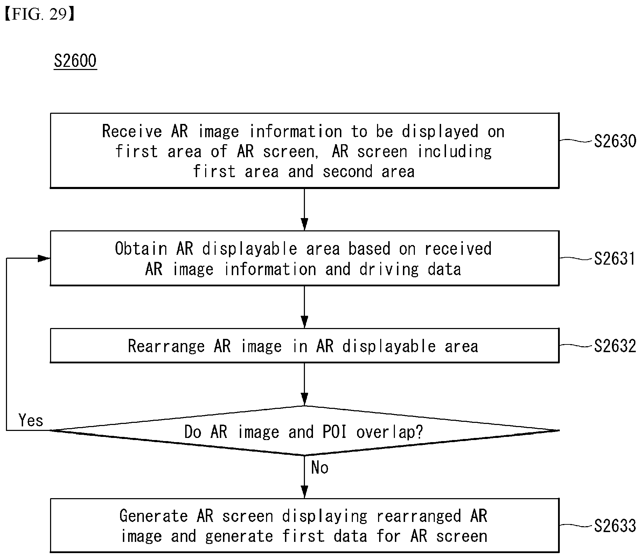

As illustrated in FIG. 29, the step S2600 of generating the first data for the AR screen according to the second embodiment of the present disclosure may include a step S2630 of receiving AR image information to be displayed on a first area AR1 of the AR screen, the AR screen including the first area AR1 and a second area AR2, a step S2631 of obtaining an AR displayable area based on the received AR image information and the driving data, and a step S2632 of rearranging the AR image in the AR displayable area.

As illustrated in FIG. 29, the step S2600 of generating the first data for the AR screen according to the second embodiment of the present disclosure may again return to the step S2631 of obtaining the AR displayable area when the AR image and the POI overlap each other after the step S2632 of rearranging the AR image.

As illustrated in FIG. 29, the step S2600 of generating the first data for the AR screen according to the second embodiment of the present disclosure may further include, when the AR image and the POI do not overlap after the step S2632 of rearranging the AR image, a step S2623 of generating the AR screen displaying the rearranged AR image and generating the first data for the AR screen.

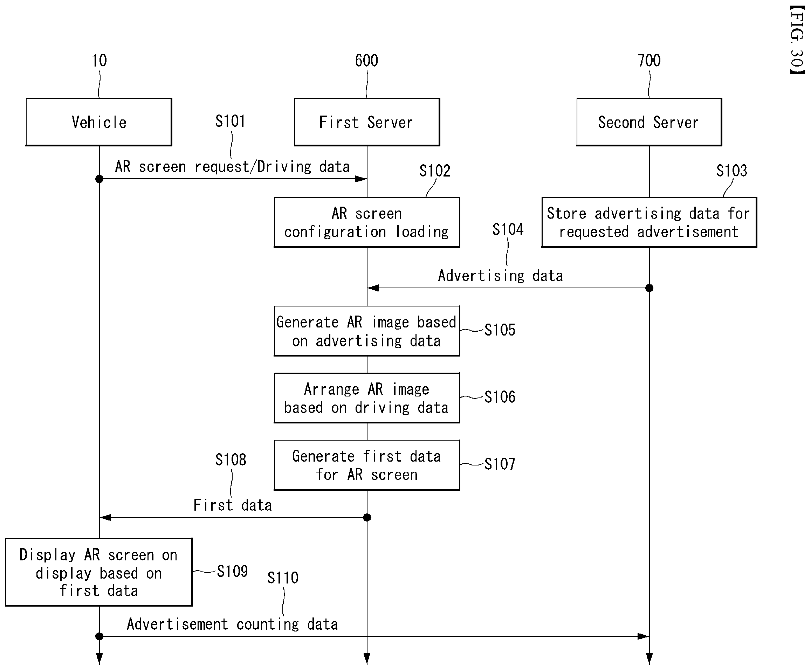

FIG. 30 illustrates a method of providing an AR screen service for vehicle according to a second embodiment of the present disclosure from a system perspective.

As illustrated in FIG. 30, a method of providing an AR screen service for vehicle may be performed by each of the vehicle 10, the first server 600, and the second server 700.

The vehicle 10 may request an AR screen from the first server 600 and obtain driving data to transmit it to the first server 600, in S101. When the first server 600 receives the AR screen request, the first server 600 may load configuration of the AR screen from a memory, in S102. The second server 700 may store advertising data for a requested advertisement, in S103. The second server 700 may transmit the advertising data to the first server 600, in S104. The first server 600 may generate an AR image (or AR video) based on the advertising data, in S105. The first server 600 may arrange the AR image in the AR screen configuration based on the driving data in S106, and generate first data for the AR screen in S107. The first server 600 may transmit the first data to the vehicle 10 in S108, and the vehicle 10 may display the AR screen on the display 530 based on the first data in S109. The vehicle 10 may count instructions input by the user based on the display 530 on which the AR screen is displayed. That is, the vehicle 10 may check a feedback of the user for a specific advertisement. The vehicle 10 may transmit advertisement counting data including the feedback of the user to the second server 700, in 5110. The vehicle 10 may also transmit the advertisement counting data to the first server 600.

Although the present disclosure has been described focusing on the above-described embodiments, they are merely examples and do not limit the present disclosure. Thus, those skilled in the art to which the present disclosure pertains will know that various modifications and applications which have not been exemplified can be performed within the range without departing from the essential features of these embodiments. For example, each component described in detail in embodiments can be modified and implemented. Further, the differences related to such modifications and applications shall be construed to be included in the scope of the present disclosure described in the appended claims.

## Claims

1. A system for a vehicle AR screen, comprising:
a vehicle including a display on which an AR screen is displayed and a GPS module configured to acquire location information;
a first server configured to provide data for the AR screen to the vehicle; and
a second server configured to provide advertising data to the first server,
wherein the AR screen includes:
a first area in which a first AR content based on the advertising data is displayed; and
a second area in which a second AR content based on the location information is displayed, and
wherein the first area and the second area are arranged along a driving section of the vehicle.

2. The system of claim 1, wherein the vehicle further includes:
a photographing device configured to take an external image of the vehicle;
a transceiver configured to receive the data for the AR screen and transmit the external image; and
a processor configured to display the AR screen on the display.

3. The system of claim 2, wherein the first server receives the external image from the vehicle and arranges the first area in a preset section of the driving section of the vehicle based on the external image, and
wherein the first server acquires information on the driving section of the vehicle from the external image.

4. The system of claim 1, wherein the first server arranges the first area in a preset section of the driving section of the vehicle.

5. The system of claim 4, wherein the first server arranges the second area in a remaining section except the section in which the first area is arranged.

6. The system of claim 1, wherein the second server provides the advertising data to the first server based on a category requested from the vehicle.

7. The system of claim 1, wherein the first server receives, from the vehicle, information on a section to arrange the first area or the second area based on a preset condition.

8. The system of claim 7, wherein the vehicle senses an empty section, in which the first area and the second area are not displayed, in the driving section of the vehicle and transmits data for the empty section to the first server.

9. The system of claim 1, wherein the first server receives, from the second server, information on a designated section to arrange the first area, and
wherein the first area is arranged along the designated section.

10. The system of claim 1, wherein the first AR content includes an AR Wall, and
wherein the second AR content includes a point of interest (POI) image.

11. The system of claim 1, wherein the second AR content includes a point of interest (POI) image, and
wherein the POI image is changed based on a driving difficulty expected until the vehicle reaches a point indicated by the POI image.

12. The system of claim 11, wherein the driving difficulty is expected based on at least one of a distance, an estimated arrival time, an estimated elapse time, a number of U-turns, and whether there is a road construction.

13. The system of claim 11, wherein the driving difficulty is expected based on a parking ease of the point indicated by the POI image.

14. A method of providing an AR screen service for a vehicle, the method comprising:
receiving AR screen request data from the vehicle;
receiving driving data from the vehicle;
receiving advertising data from an external server;
generating first data for an AR screen based on the driving data and the advertising data; and
transmitting the first data to the vehicle,
wherein the AR screen includes:
a first area in which a first AR content based on the advertising data is displayed; and
a second area in which a second AR content based on location information is displayed, and
wherein the first area and the second area are arranged along a driving section of the vehicle.

15. The method of claim 14, wherein the first area is arranged in a preset section of the driving section of the vehicle.

16. The method of claim 15, wherein the second area is arranged in a remaining section except the section in which the first area is arranged.

17. The method of claim 14, further comprising:
receiving, from the vehicle, information on a section to arrange the first area and the second area,
wherein the information is information on an empty section, in which the first area and the second area are not displayed, in the driving section of the vehicle.

18. The method of claim 14, further comprising:
receiving, from the external server, information on a designated section to arrange the first area,
wherein the first area is arranged along the designated section.

19. The method of claim 14, wherein the first AR content includes an AR Wall, and
wherein the second AR content includes a point of interest (POI) image.

20. The method of claim 19, wherein the second AR content includes the point of interest (POI) image, and
wherein the POI image is changed based on a driving difficulty expected until the vehicle reaches a point indicated by the POI image.
